(19) Europäisches Patentamt
European Patent Office
Office européen des brevets

(11) **EP 4 332 635 A1**

(12) **EUROPÄISCHE PATENTANMELDUNG**

(43) Veröffentlichungstag:
**06.03.2024  Patentblatt 2024/10**

(21) Anmeldenummer: **23194186.5**

(22) Anmeldetag: **30.08.2023**

(51) Internationale Patentklassifikation (IPC):
**G01T 1/169** (2006.01)   **G01T 7/00** (2006.01)

(52) Gemeinsame Patentklassifikation (CPC):
**G01T 7/00; G01T 1/169**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **31.08.2022  DE 102022121953**

(71) Anmelder: **AIT Austrian Institute of Technology GmbH**
**1210 Wien (AT)**

(72) Erfinder:
- **SCHRAML, Stephan**
  **1200 Wien (AT)**
- **HUBNER, Michael**
  **1050 Wien (AT)**
- **TAUPE, Philip**
  **2000 Stockerau (AT)**
- **HOFSTÄTTER, Michael**
  **2380 Perchtoldsdorf (AT)**
- **CZETINA, Aneta**
  **1020 Wien (AT)**

(74) Vertreter: **Wildhack & Jellinek Patentanwälte**
**Patentanwälte OG**
**Landstraßer Hauptstraße 50**
**1030 Wien (AT)**

(54) **VERFAHREN ZUR ECHTZEIT LOKALISIERUNG RADIOAKTIVER QUELLEN MITTELS UAV**

(57)    Verfahren zur Lokalisierung radioaktiver Quellen in einem zu untersuchenden freien Terrain in Echtzeit
- mit einer mobilen Trägerplattform, auf welcher eine Gamma-Sonde und eine Lokalisierungsvorrichtung angeordnet sind,
- wobei die Trägerplattform dazu geeignet ist, das Terrain abzufahren oder zu überfliegen,
wobei (a) eine elektronische Karte für das Terrain und ein Modell der Hintergrundstrahlung des Terrains bereitgestellt werden,
(b) woraufhin die Trägerplattform einen Teil des Terrains während einer Spürfahrt abfährt oder überfliegt, und
(c) währenddessen Radioaktivitätsmesswerte mittels der Gamma-Sonde erfasst werden und
(d) die Radioaktivitätsmesswerte zusammen mit den über die Lokalisierungsvorrichtung ermittelten Koordinaten der Trägerplattform in ein Rechenmodell eingegeben werden, in welchem Verstrahlungswerte unter Berücksichtigung der Hintergrundstrahlung errechnet werden und eine Zuordnung der errechneten Werte zu Kartenpunkten durchgeführt wird,
(e) wobei Interpolationen zwischen dem Verstrahlungswert eines Kartenpunktes (6) mit den Verstrahlungswerten von benachbarten und laufend hinzutretenden Kartenpunkten durchgeführt werden, und
(f) darauf aufbauend ein oder mehrere Positionen von Quellen errechnet werden, sowie
(g) eine Ausgabe des Ergebnisses in Form einer Liste umfassend allfällig erkannte Quellenpositionen oder in Form einer zweidimensionalen Graphik, welche das Terrain darstellt und in welcher allfällig erkannte Positionen von Quellen verzeichnet sind, erfolgt.

FIG 1

**Beschreibung**

Die Erfindung betrifft ein Verfahren zur Lokalisierung radioaktiver Quellen in einem zu untersuchenden freien Terrain in Echtzeit mit einer mobilen Trägerplattform, auf welcher eine Gamma-Sonde und eine Lokalisierungsvorrichtung angeordnet sind, wobei die Trägerplattform dazu geeignet ist, das Terrain abzufahren oder zu überfliegen.

Es gibt zahlreiche Ereignisse, bei denen es von hohem Interesse ist, die radioaktive Verstrahlung eines freien Terrains sicher und schnell zu quantifizieren, um Personen, Bergungsteams und andere vor Schäden zu schützen. Solche Ereignisse sind Unfälle, Anschläge oder militärische Ereignisse, bei denen radioaktive Substanzen involviert sind. Bisher müssen Terrains auf der Basis ggf. vorhandenem Zusatzwissens von Personen in Schutzkleidung erkundet werden. Alternativ kann radioaktive Strahlung von einem Hubschrauber aus, der das Terrain überfliegt, gemessen werden, woraufhin nach dem Flug die gesammelten Daten auszuwerten sind, um aus ihnen Schlüsse ziehen zu können.

Die WO2021235777 A1, die WO2020198877 A1 und die FR3088306 A1 offenbaren jeweils eine Drohne, die einen Strahlungsdetektor trägt. Eine besondere Verarbeitung der Messwerte wird nicht angegeben.

EP3036565 A1 betrifft ein Verfahren und eine Vorrichtung, in einem möglicherweise radioaktiv kontaminiertem Gebäudeabschnitt mittels handgeführtem, aber auf einer feststellbaren 3D-Trajektorie wanderndem Strahlungsmessgerät eine Raumarchitektur zu errechnen und Verstrahlungsmodell für den Gebäudeabschnitt zu ermitteln. Das Verfahren und die Vorrichtung sind für eine Vermessung von freien Terrains nicht geeignet.

EP0194933 A1 beschreibt ein Verfahren und eine Vorrichtung, radioaktive Strahlung in einem Gebiet mittels Fluggerät zu messen und die Messdaten rudimentär aufgearbeitet graphisch darzustellen. Das Verfahren ist hinsichtlich einer Messung der Dosisleistung am Boden und hinsichtlich der Position von Quellen ungenau.

Amestoy Julien et al., "Effects of environmental factors on the monitoring of environmental radioactivity by airborne gamma-ray spectrometry", in: JOURNAL OF ENVIRONMENTAL RADIOACTIVITY, 20210728 ELSEVIER APPLIED SCIENCE PUBLISHERS, BARKING, GB, Band 237, ISSN 0265-931X vom 28. Juli 2021 lehrt ein Verfahren, in einem Gebiet natürliche Einflussfaktoren auf Messdaten zu radioaktiven Quellen zu ermitteln und für eine Datenaufbereitung herauszurechnen. Ein Verfahren für ein einzelne Spürfahrt und eine Datenauswertung in Echtzeit wird nicht angegeben.

Yukihisa Sanada et al., "Aerial radiation monitoring around the Fukushima Dai-ichi nuclear power plant using an unmanned helicopter", in: JOURNAL OF ENVIRONMENTAL RADIOACTIVITY, 20150101 ELSEVIER APPLIED SCIENCE PUBLISHERS, BARKING, GB, Band 139, S. 294-299, ISSN 0265-931X vom 1. Januar 2015 zeigt ein Verfahren, mittels ferngesteuertem Helikopter, der ein Strahlungsmessgerät mit sich führt, ein freies Terrain abzufliegen und anschließend die radioaktive Bodenbelastung zu errechnen. Eine Berechnung in Echtzeit wird nicht angegeben.

Ziel der Erfindung ist es, ein Verfahren zu schaffen, durch welches radioaktive Quellen auf einem unbekannten Terrain sicherer und schneller entdeckt werden können. Die Erkundung soll genauer hinsichtlich von Eigenschaften wie der Position und/oder der quantitativen Strahlungsmessung sein, sowie sicher und einfach in der Bedienung durch einen Operator. Das Verfahren soll vielseitig anwendbar und adaptierbar sein. Schließlich soll es auch kostengünstig herstellbar und wartungsarm sein.

Das erfindungsgemäße Verfahren erreicht dies dadurch, dass

(a) eine elektronische Karte für das Terrain und ein Modell der Hintergrundstrahlung des Terrains bereitgestellt werden,

(b) woraufhin die Trägerplattform einen Teil des Terrains während einer Spürfahrt abfährt oder überfliegt, und

(c) währenddessen Radioaktivitätsmesswerte mittels der Gamma-Sonde erfasst werden und

(d) die Radioaktivitätsmesswerte zusammen mit den über die Lokalisierungsvorrichtung ermittelten Koordinaten der Trägerplattform in ein Rechenmodell eingegeben werden, in welchem Verstrahlungswerte unter Berücksichtigung der Hintergrundstrahlung errechnet werden und eine Zuordnung der errechneten Werte zu Kartenpunkten durchgeführt wird,

(e) wobei Interpolationen zwischen dem Verstrahlungswert eines Kartenpunktes mit den Verstrahlungswerten von benachbarten und laufend hinzutretenden Kartenpunkten durchgeführt werden, und

(f) darauf aufbauend ein oder mehrere Positionen von Quellen errechnet werden, sowie

(g) eine Ausgabe des Ergebnisses in Form einer Liste umfassend allfällig erkannte Quellenpositionen oder in Form einer zweidimensionalen Graphik, welche das Terrain darstellt und in welcher allfällig erkannte Positionen von Quellen verzeichnet sind, erfolgt.

Bei einer Ausführungsform der Erfindung wird der Trägerplattform ein Bewegungsmuster zum Abfahren oder Abfliegen, vorzugsweise ein mäanderförmiges Bewegungsmuster mit vorbestimmten Rasterabstand vorgegeben. Dadurch können allfällig vorhandene Informationen über das zu untersuchende Ereignis und Gelände genutzt und die Messdauer insgesamt verkürzt werden.

Es kann ebenso vorgesehen sein, dass die Trägerplattform das Bewegungsmuster semi-autonom abfährt oder abfliegt. Dies erleichtert die Bedienung und verringert den Personalaufwand.

Als vorteilhaft hat sich erwiesen, wenn die Radioaktivitätsmesswerte zumindest Messwerte in CPS umfassen. Dadurch können Messwerte in rohem Stadium und als Messresultat insgesamt mit Messwerten anderswo verglichen werden. Zudem kann dadurch eine standardisierte Gamma-Sonde verwendet werden.

In einer weiteren Ausführungsform stellt die Gamma-Sonde während der Spürfahrt Radioaktivitätsmesswerte im Sekundentakt bereit. Dies erhöht die Genauigkeit des Messresultates insgesamt.

Es ist ebenso daran gedacht, dass die Schritte (d) bis (f) in einer Rechnereinheit auf der Trägerplattform erfolgen. Dies reduziert die zu übertragende Datenmenge, was dem Erfordernis der Berechnung in Echtzeit und der Zuverlässigkeit der Messungen bei widrigen Umgebungsbedingungen förderlich ist.

Bei einer Ausführungsform der Erfindung werden die Messdaten der Gamma-Sonde und der Lokalisierungsvorrichtung zu einem Datensatz zusammengefasst und an eine externe Station mittels Funkfernverbindung gesendet. Dies reduziert abermals die zu übertragende Datenmenge.

Es kann ebenso vorgesehen sein, dass die Lokalisierungsvorrichtung ein GPS-Modul ist. Dadurch können Positionen von Quellen genauer errechnet werden.

Als vorteilhaft hat sich erwiesen, wenn die Interpolationen zwischen dem Verstrahlungswert eines Kartenpunktes mit den Verstrahlungswerten von benachbarten und laufend hinzutretenden Kartenpunkten durchgeführt werden, indem (i) zwischen den Messpunkten und darüber hinaus auf ein Raster, welches über das gesamte Terrain gelegt wird, interpoliert wird, und zwar vorzugsweise mithilfe des Kriging-Verfahrens, und (ii) ausgehend von dem Raster auf alle Bodenpunkte des Terrains interpoliert wird. Dadurch erspart man sich ein häufiges Überfliegen oder einen engen Rasterabstand der Messfahrten oder Messflüge.

In einer weiteren Ausführungsform weist die Trägerplattform eine Stereokamera auf. Dadurch erhält man in vorteilhafter Weise Zusatzinformation über Art und Beschaffenheit sowie über Lage von Quellen am Boden.

Es ist ebenso daran gedacht, dass die Trägerplattform ein ULFZ ist. Somit kann ungefährdet von der Luft aus gemessen werden, und es wird zudem kein zusätzliches Bedienpersonal benötigt.

Gemäß einer weiteren Fortführung der Erfindung wird zur Verbesserung der Messgenauigkeit vor dem Überfliegen des Terrains ein Kalibrierungsflug in einem bekannten Gebiet durchgeführt, wobei während des Kalibrierungsfluges die Hintergrundstrahlung in Abhängigkeit der Flughöhe ermittelt wird.

Bei einer Ausführungsform der Erfindung werden in das Rechenmodell auch Eigenstrahlung, die kosmische Strahlung und die terrestrische Strahlung eingebracht werden. Dies erhöht die Messgenauigkeit.

Es kann ebenso vorgesehen sein, dass die Trägerplattform einen LiDAR-Sensor aufweist mit welchem während der Erfassung der Radioaktivitätswerte ein Bodenbild des abgeflogenen Terrains erstellt wird. Dadurch kann eine vorhandende digitale Karte mit weiteren räumlichen Bodeneigenschaften oder mit klassifizierbaren Bodentypen ergänzt werden, die Erkenntnisse zur Lage von Quellen und zum Strahlungsbild anreichern.

Als vorteilhaft hat sich erwiesen, wenn die Trägerplattform ein Landfahrzeug ist. Sofern das zu erforschende Gelände zugänglich genug ist, kann unabhäniger von Wetter- und Lichtverhältnissen sowie näher an Quellen am Boden gemessen werden.

Die Erfindung wird anhand der nachstehenden Ausführungsbeispiele näher erläutert und durch beispielhafte Zeichnungen und Diagramme erklärt, dabei ist Fig. 1 die schematische Systemarchitektur, Fig. 2 ein Modell der Strahlungseinflüsse, Fig. 3 eine Karte und eine Höhenmessung zu einem Kalibrierflug, Fig. 4 zwei Modellierungen zum Strahlungshintergrund, Fig. 5 ein schematisches Strahlungsmodell, Fig. 6 ein Schrittdiagramm der Laserdaten-Aufbereitung, Fig. 7 ein Schrittdiagramm der Gammadaten-Aufbereitung, Fig. 8 eine Anwendung des Hintergrundmodells auf eine Karte, Fig. 9 Klassifizierungen von Bodentypen auf einer Karte, Fig. 10 eine Darstellung von Zwischenschritten einer Hotspots-Berechnung in einer Karte, Fig. 11 eine Flugbahn über einer Karte mit Messpunkten, Fig. 12 drei Intensitätsmessungen mit Fehlerminimierungen, Fig. 13 zwei Beispiele für Spektren, Fig. 14 ein Verstrahlungsbild in einer Karte, Fig. 15 eine Darstellung der Genauigkeit der Quellenlokalisierung.

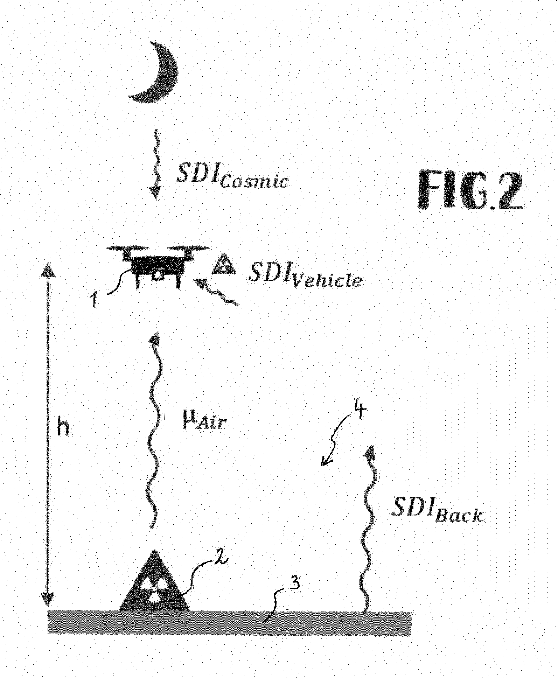

Das entwickelte radiologische Luftspürsystem soll die Sicherheit von Einsatzkräften erhöhen, indem in Echtzeit radioaktive Quellen in einem Gebiet, bzw. Terrain 4 und radiologische Verstrahlungsbilder ermittelt werden. Der Einsatzzweck ist für die Erfassung kleinräumiger und mittelräumiger Verstrahlung ausgelegt, die von einer unbestimmten Anzahl von Quellen verursacht wird. Dafür wird eine unbemannte Plattform wie etwa die in Fig. 2 gezeigte Trägerplattform in das Terrain 4 geschickt und ermittelt mit einem System aus Sensoren die interessierenden Werte.

Das System setzt sich zusammen aus einem Sensormodul bestehend aus einem optionalen hochgenauen Laserscanner, einer leistungsfähigen Gamma-Sonde und einem Funkmodul, sowie neu entwickelter Verfahrensteile zur Berechnung und Modellierung der Verstrahlungsbilder. Das Sensorikpaket ist dabei modular konzipiert, wodurch es mit minimalen Anpassungen auf unterschiedlichen Trägerplattformen eingesetzt werden kann. Die im Rahmen der Erfindung durchgeführten Tests und Evaluierungen erfolgten mit einem unbemannten Luftfahrzeug (ULFZ 1, oder auch "unmanned airborne vehicle", UAV) als Trägerplattform.

Das radiologische Luftspürsystem umfasst Komponenten, die im Weiteren im Detail beschrieben sind:
Das Sensormodul mit Laserscanner, Gamma-Sonde und Funkmodul zur Live-Datenübertragung für Reichweiten bis 500 m werden weiter unten beschrieben. Als Beispiel einer Integration ist jene an einem ULFZ der Ausführung "RiCOPTER-M" angeführt. Mit der Datenaufbereitung wird in Echtzeit ein aktuelles und genaues Geländeprofil des Terrains 4 samt Klassifizierung der Oberflächenobjekte (Boden, Vegetation, Gebäude) erstellt. Als vorbereitende Maßnahme zur korrekten Berechnung der Verstrahlung kann ein Kalibrierflug durchgeführt werden. Wie diese Kalibrierdaten eingesetzt werden, um zusätzliche (zum Strahlungshintergrund) Strahlungsquellen sichtbar zu machen, wird nun ebenso beschrieben. Während die Hotspots Bereiche erhöhter Strahlung qualitativ, aber quellenunabhängig abbilden, wird mit dem Verstrahlungsbild die konkrete Dosisleistung quantitativ für jeden Geländepunkt modelliert. An das Gelände angepasste Verstrahlungslinien zeigen die Grenzen von Bereichen erhöhter Strahlung an. Im Rahmen der Erfindung ist auch an eine benutzergerechte Visualisierung sowie mit der Evaluierung der (Boden-)Spürtechniken zur Anwendung als Luftspürverfahren mit einem UAV gedacht. Schließlich werden auch Regulierungsauflagen beachtet und die zu erzielende Genauigkeit bestimmt.

Die Dosisleistung ist dabei die Äquivalenzdosis (Strahlungsenergie), die von einem Organismus pro Zeiteinheit aufgenommen wird. Die übliche Maßeinheit dafür ist Sievert pro Stunde [Sv/h].

Eine Gamma-Sonde ist ein handelsübliches Messinstrument. Zentraler Bestandteil ist ein Kristall, der ungerichtet oder mit einem relativ großen Öffnungswinkel elektromagnetische Strahlung im üblichen Spektralbereich erfasst.

Die Erfindung zielt darauf ab, eine wesentliche Verbesserung beim Aufspüren von radioaktiven Quellen 2 zu bieten. Mit dem in entwickeltem System wird eine Erhöhung der Sicherheit der Einsatzkräfte durch die Echtzeit-Generierung von quantitativen Verstrahlungskarten auf Bodenhöhe erreicht. Konkret werden drei Ziele erreicht:

- Bestimmung der Ortsdosisleistung am Boden 7

Basierend auf Messungen in der Luft und Identifikation des Radionuklids sollen für komplexe Terrains 4, wie jene mit z.B.: Gebäuden 9, steilen Abhängen, und für mehrere Punktquellen die Ortsdosisleistung am Boden 7 in einem Meter über Grund berechnet werden.

- Plattformunabhängiges Sensorik-Paket

Das Sensorikpaket bestehend aus Laserscanner und Gamma-Sonde, wobei die Datenübertragung derart konzipiert ist, dass eine Plattformunabhängigkeit gegeben ist. Weitere Module kommen bei der Einsatzleitung außerhalb der Trägerplattform zur Verwendung, diese dienen zum Empfang der Daten vom z.B. ULFZ 1, der Durchführung der Berechnungen und schließlich der benutzeroptimierten Visulisierung der Ergebnisse und Live-Daten.

- Luftspürverfahren

Erreichtes Ziel ist es, eine Analyse zur Anwendbarkeit der Bodenspürverfahren im Hinblick auf Luftspürverfahren durchzuführen und geeignete Spürverfahren für UAV abzuleiten. Einige der wichtigsten Bodenspürverfahren sind: Spüren entlang von Verstrahlungslinien, Spüren nach höchster Dosisleistung.

Im Rahmen der Erfindung bedeutet Echtzeit eine Ausgabe von neuen oder aktualisierten verarbeiteten Messdaten innerhalb weniger Sekunden und weniger. Diese Zeitspanne ist bedeutend kürzer als ein Messflug oder eine Messfahrt dauert, welche selbst in den kürzesten Fällen im Bereich mindesten von einigen Minuten ist.

In diesem Zusammenhang widmet sich das Umfeld der Erfindung auch der Beantwortung einer Reihe von Forschungsfragen von der zugrundeliegenden Methodik bei der Berechnung von Verstrahlungskarten bis hin zur Nutzung des Systems:

A. Welche Luftspürverfahren für die Verstrahlungsmessung und das Spüren nach höchster Dosisleistung gibt es und welche Bodenspürverfahren können für das Luftspüren adaptiert bzw. verwendet werden?

B. Welche Verfahren können beim Spüren entlang von Bewegungslinien eingesetzt werden?

C. Welche technischen Anforderungen muss eine Trägerplattform erfüllen, um das Luftspüren nach radioaktiven Quellen zu ermöglichen?

D. Welche Berechnungsmodelle können verwendet werden, um die Dosisleistung am Boden 7 abzuschätzen, obwohl sie in der Luft gemessen wurden?

E. Wie wirkt sich die Flughöhe h auf die Genauigkeiten der ermittelten Dosisleistung am Boden 7 aus?

F. Welche Methoden können für die Umrechnung der Impulsraten in die Dosisleistung angewendet werden?

G. Welche Methoden können angewendet werden, um die Daten des 3D Geländemodells in die Verstrahlungs-Berechnungsmodelle einfließen zu lassen, um beispielsweise Vegetation 8 und Gebäude 9 zu berücksichtigen?

H. Welche Auflösung und Genauigkeit des 3D Geländemodells sind zweckmäßig, um die Dosisleistung mit der geforderten Präzision bestimmen zu können und welchen Einfluss hat die Vegetation 8, Gebäude 9 als auch andere Objekte auf die Genauigkeit des Berechnungsmodells?

I. Auf welche Weise sollen die Informationen, wie z.B. Ort und Zeitpunkt der Messwerte oder Linienspektren dargestellt werden, um militärische Einsatzkräfte bestmöglich zu unterstützten?

Hinsichtlich der technischen Leistungsbeschreibung des Sensorsystems gibt es Anwendungsfälle (sog. Use Cases), bestimmte Anforderungen und Nichtanforderungen.

Use Cases:

- Ereignistypen

Entsprechend der Richtlinien der IAEA [EPRMethod2003] sind folgende Ereignistypen, die eine radiologische Notstandssituation verursachen können bzw. eine solche darstellen, relevant:

a) Ereignisse mit großräumigen Kontaminationen:

- Zwischenfälle in kerntechnischen Anlagen (insbesondere Zwischenfälle in Kernkraftwerken und großräumig erhöhte Strahlungswerte)

- Absturz von Satelliten mit radioaktivem Inventar

b) Ereignisse mit kleinräumigen Kontaminationen bzw. Auswirkungen:

- Zwischenfälle in nationalen Anlagen

- Zwischenfälle mit gefährlichen Strahlenquellen (inkl. Unfälle mit Nuklearwaffen)

- Radiologischer Terror

- Schmuggel

- Verlorene Radioaktive Quellen

Im Fall eines Zwischenfalls in kerntechnischen Anlagen kann das Spüren mit Luftfahrzeugen einen raschen Überblick über die Situation liefern. Der Einsatz verdichtet dabei die durch Messnetze wie z.B. das österreichische Strahlenfrühwarnsystem erhaltenen Messdaten. Zu beachten ist dabei, dass der Einsatz des Luftfahrzeuges erst nach Beendigung der Deposition erfolgen sollte. Darüber hinaus sollten sich Start- und Landeplätze außerhalb des kontaminierten Gebietes und somit zu untersuchenden Terrains 4 befinden.

Die größte Herausforderung stellt wohl der Absturz eines Satelliten mit radioaktivem Inventar dar. Bruchstücke werden über mehrere hundert Kilometer verteilt. Um die vorhandenen Ressourcen möglichst effizient einzusetzen sollte zunächst eine rasche Lokalisierung stark strahlender Bruchstücke durch Überflüge in größerer Höhe durchgeführt werden. Ausgehend von den so erhaltenen Orten werden in umliegenden urbanen Gebieten auch schwächer strahlende Teile gesucht, wobei auch die Möglichkeit der Ablagerung auf Dächern - einschließlich der Abschirmung durch Gebäude 9 - zu berücksichtigen ist. Mit niedrigerer Priorität sollen danach Verkehrsverbindungen und landwirtschaftlich genutzte Fläche untersucht werden.

Bei kleinräumigen Szenarien wäre die Suche nach entwendeten oder verwaisten Strahlenquellen, die (verdeckte) Untersuchung von größeren Transporteinheiten auf geschmuggelte Strahlenquellen, z.B. im Rahmen einer "maritime interdiction operation", als mögliche Einsätze anzusehen.

Sämtliche Tests sind nur kleinflächig durchzuführen. Jedoch sollen in den Anforderungen auch großflächige Szenarien berücksichtigt werden.

- Strahlenquellen

Hinsichtlich der Verteilung von Quellen 2 ist im Rahmen der Erfindung von punktförmigen Strahlern auszugehen. Wobei bezüglich der Anzahl der Quellen 2, sowohl Einzelquellen als auch an mehreren Orten gleichzeitig exponierte Einzelquellen zu berücksichtigen sind. Insbesondere ist hier die messtechnische Unterscheidbarkeit zu evaluieren.

Alle Strahlenquellen befinden sich auf festem Untergrund und sind zumindest nicht vollständig abgedeckt oder abgeschirmt. Teilverdeckungen sind hingegen zu brücksichtigen, was mit dem Verfahren auch erfüllt wird.

Funktionale Anforderungen und Randbedingungen:

- Geländemodell

Mit Hilfe des Laserscanners in der Ausführung eines 3D LiDAR-Sensors ist ein genaues Geländemodell zu erstellen, welches in die Berechnung der Ortsdosisleistung auf Bodenniveau einfließen soll. Hierbei sollen beispielsweise Vegetation 8 und Gebäude 9 automatisch detektiert sowie deren spezifische abschirmende Wirkung in den Berechnungen berücksichtigt werden.

- Quellensuchverfahren

Das System soll ein effizientes Verfahren für die Lokalisation von mehreren punktförmigen Quellen 2 (Punktquellen), welche auch abgeschirmt sein und/oder unterschiedliche Radionuklide aufweisen können, anbieten.

- Bestimmung der Ortsdosisleistung bei radiologischen Notstandssituationen

Das System schätzt die Ortsdosisleistung auf Bodenniveau so genau wie möglich, basierend auf den Radioaktivitäts-Messungen in der Luft, ab, um eine Entscheidungsgrundlage bei Einsätzen bieten zu können.

Die Umrechnung (der Luftmessung auf Bodenniveau) erfolgt anhand der sogenannten Spectrum Dose Index (SDI) Methode, wobei eine ortsbezogene Kalibrierung des Messsystems vorzusehen ist, die Effekte der Hintergrundstrahlung korrigiert. Dazu ist die Höhenkorrektur von Bedeutung, mit der lokale Absorptionskoeffizient der Luft berücksichtigt wird. Dieser ist von den vorherrschenden Umweltparametern wie Höhe, Luftdruck und Luftfeuchte abhängig.

Das Ergebnis ist anhand von Grundwahrheiten zu verifizieren. Ebenso soll die Umrechnung auch für unterschiedliche Radionuklide untersucht werden, da abhängig von der Energie des Radionuklids mit unterschiedlichen Umrechnungsfaktoren für die Dosisleistung gerechnet werden muss.

- Visualisierung

Die Visualisierung dient einerseits dazu ein Bild der aktuellen Lage zu geben, wobei wichtige Messgrößen dargestellt und Ergebnisse der Auswertungen visualisiert werden. Folglich muss die Visualisierung in der Lage sein, neue Inhalte in Echtzeit zu übernehmen und graphisch aufzubereiten. Hierbei ist der Begriff Echtzeit allerdings im Zusammenhang mit der Flugdauer zu sehen, weshalb ein kurzes zeitliches Fenster von Messzeitpunkt bis zur Darstellung von wenigen Minuten noch akzeptiert werden. Andererseits hat die Visualisierung den Zweck, jene Daten zu visualisieren, die für die Erprobung der Spürtechniken erforderlich sind. Dazu gehören ebenso die Ergebnisse der Groberkundung, sowie die Messwerte.

Nicht funktionale Anforderungen:

- Plattformunabhängigkeit

Durch die erfindungsgemäßen Verfahren wird eine elektrische und mechanische Plattformunabhängigkeit sichergestellt. Hierbei kann darauf zurückgegriffen werden, durch notwendige Parametrisierungen des Berechnungsmodells Abhängigkeiten von der Trägerplattform zu befreien. Folglich muss zumindest, um die Plattformunabhängigkeit zu gewährleisten, eine Eingabemöglichkeit der Parametrisierung geben sein.

- Leistungsgrenzen

Für den zielgerichteten Einsatz des Systems ist es von fundamentaler Bedeutung, die Leistungsgrenzen zu definieren. Hierzu soll beschrieben werden, nach welchem Regelwerk eine situationsbezogene Abschätzung der Leistungsgrenzen vorzunehmen ist. Für das System muss bekannt sein, welche Einsatzparameter (z.B. min/max Flughöhe h falls UAV, Geschwindigkeiten, Szenarien etc.) einzuhalten sind, um zuverlässige Ergebnisse zu erhalten und inwiefern sich ein Verlassen dieses definierten Parameterraumes auf die zur Verfügung gestellte Funktionalitäten und Steuerungsmöglichkeiten auswirken kann. Die Definitionen dieser Grenzen sind mittels entsprechender Feldversuche gestützt worden.

Die Betriebsgrenzen der verwendeten Trägerplattform (UAV/Helikopter) sind unabhängig vom Messsystem zu betrachten. Für den sicheren Betrieb und Materialerhaltung sind die jeweiligen Betriebsbücher heranzuziehen.

- Betrieb

Bei einem Einsatz in einem Helikopter ist keine zusätzliche Person (ABCist) vonnöten sein. Nur Pilot und Navigator befinden sich im Helikopter.

- Schnittstellen

Die Verstrahlungskarte auf Bodenniveau wird durch das Verfahren in der Live-Darstellung angezeigt. Wichtig ist, dass diese Verstrahlungskarte auch in Form einer 2D Projektion auf Bodenniveau vorliegt, damit diese in das ABC-Informationssystem (ABC-IS) eingespeist werden kann. Dazu ist die Schnittstelle zum ABC-IS in Form von Shape Files (Isolinien) als Datei realisiert.

Um Insellösungen zu vermeiden werden Überlegungen zur Standardisierung von Schnittstellen und Datenformaten einfließen. Interessant hierbei sind die oftmals lokal definierten Einsatzgebiete in einem Gesamtkontext in bekannten Führungsinformationssystemen zu sehen. Hierbei ist wichtig festzustellen, welche Informationen von Bedeutung sind.

**-** Allgemeine Anforderungen

- Grundsätzlich sind unabhängig von der Trägerplattform (ULFZ 1, Helikopter, Fahrzeug) die Kommunikationskanäle (Steuerung, Daten-Downlink, Daten-Uplink - Wegpunkte) getrennt zu konzeptionieren.
- Im Allgemeinen ist der Downlink im Konzept generisch (Mobilfunk, WLAN, Ethernet) und damit unabhängig von der Trägerplattform herzustellen. Hingegen ist die Steuerung sehr wohl abhängig von der jeweiligen Trägerplattform zu verstehen.
- Das Sensorpaket ist unabhängig von der Trägerplattform und besteht im Rahmen der Erfindung somit immer aus den gleichen Sensoren.
- Die Reichweite des Systems soll bei dem Verfahren eine plattformabhängige Eigenschaft sein. Eine wichtige Nebenbedingung ist, dass ein Daten-Downlink gegeben ist, um den Aufbau der Karte zu ermöglichen.
- Als Übertragungstechnologie kann zunächst WLAN verwendet werden. Alternativ ist jedoch der Umstieg auf Mobilfunk möglich.

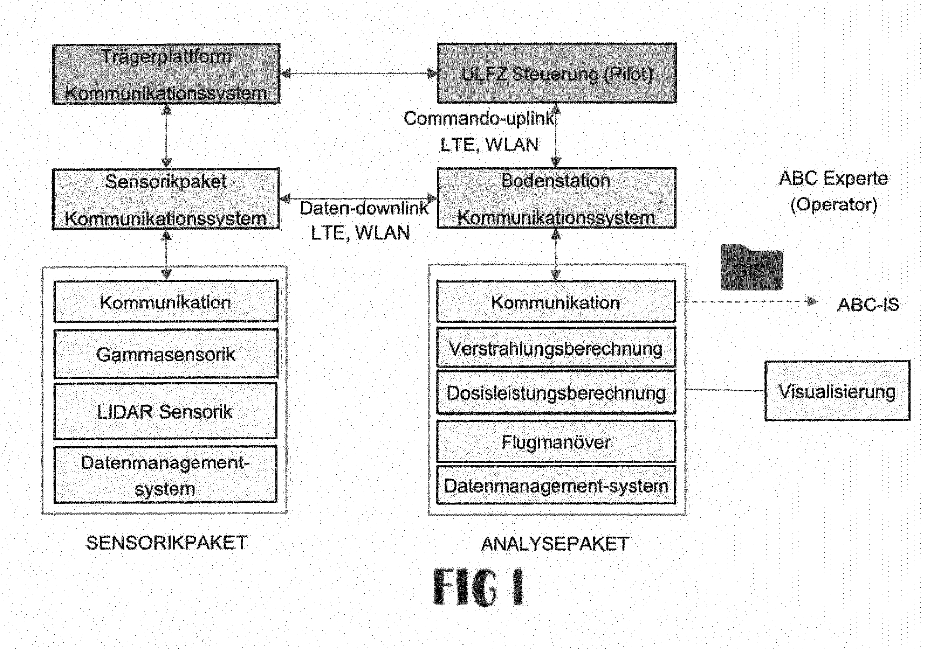

Die Spezifikation des erfindungsgemäßen Verfahrens hängen von den Szenarien und der Systemarchitektur ab. Letztere ist in Fig. 1 dargestellt.

Hinsichtlich der Szenarien sollen mit dem Luftspürsystem vor allem, aber nicht nur kleinflächige Gebiete im urbanen Raum abgedeckt werden. Eine genaue Definition wird durch Abgrenzung der Szenarien hinsichtlich dreier Kategorien gegeben.

- Einsatzgebiet

Primäres Einsatzgebiet ist ein lokal begrenztes Gebiet, in dem radioaktive Verstrahlung vermutet wird. Die Ausdehnung des zu untersuchenden Gebietes liegt etwa in der Größenordnung von 100 bis 1000 m Radius. Eine großflächige Verstrahlung wird nicht direkt adressiert aber zumindest im Blick behalten.

- Radioaktive Quellen

Es kommen alle Arten von radioaktiven Quellen in Frage, die Gammastrahlung emittieren. Alpha- und Beta-Strahler werden nicht berücksichtigt. Bezüglich der Verbreitung wird von punktförmigen Quellen 2 ausgegangen. Eine Flächenverstrahlung liegt nicht im Rahmen der Erfindung, weil eine flächenmäßige Verstrahlung z.B. in Österreich nicht erzeugt/simuliert werden kann. Es wird davon ausgegangen, dass sich die Quelle 2 jedenfalls am Boden 7 oder festem Untergrund befindet. D.h. die Quelle 2 könnte auch auf einem Gebäude 9 oder unter Vegetation 8 liegen. Bezüglich der Nuklide werden keine Einschränkungen angenommen, womit auch Quellen 2 mit unterschiedlichen Nukliden auftreten können.

- Umgebung und Gelände

Das Szenario kann im freien Gelände sein, aber auch im urbanen Gebiet liegen. Alle Arten von Vegetation können vorkommen. Gewässer können vorhanden sein, jedoch ist zu berücksichtigen, dass der Laserscanner nicht für deren Vermessung geeignet ist. Insbesondere bedeutet dies, dass die Quelle auch von Vegetation 8 oder Gebäuden 9 abgeschattet sein kann, jedoch grundsätzlich sichtbar ist. Zur Gänze abgeschattete Quellen werden nicht explizit berücksichtigt.

Hinsichtlich der Systemarchitektur ist in Fig. 1 die Architektur des Luftspürsystems skizziert. Die grundsätzliche Architektur spiegelt die Aufteilung in zwei Subsysteme, dem Sensorikpaket und dem Analysepaket wider. Nur das ULFZ 1 wird mit dem Sensorikpaket bestückt autonom oder semi-autonom in die Gefahrenzone zur automatischen Erkundung gebracht.

Im Rahmen der vorliegenden Erfindung bedeutet ein autonomer Flug bzw. eine autonome Fahrt, dass die Trägerplattform ohne Fernsteuerung einem vorgegebenen Pfad, ggf. auch selbständig während der Bewegung geändert oder angepasst folgt. Der Operator (ein ABC Experte) verfolgt dann lediglich die Ausgabe der errechneten Messwerte.

Im Rahmen der vorliegenden Erfindung bedeutet ein semi-autonomer Flug bzw. eine semi-autonome Fahrt, dass entweder zwar die Trägerplattform unbemannt, aber permanent durch eine Person ferngesteuert ist; oder dass der Operator jederzeit in einen vorgegebenen und gefolgten Pfad eingreift, sobald er es - hauptsächlich in Reaktion auf Anzeichen von Quellen 2 - für angemessen hält, um beispielsweise die Erkundung zu beschleunigen.

Dadurch kann der ABC-Experte die Auswertung der Analyseergebnisse in sicherer Distanz durchführen. Um die Modularität des Sensorsystems zu wahren, soll eine unabhängige Datenverbindung für die Datenübertragung aufgebaut werden. Es werden getrennte Kanäle für Daten und Kommandos verwendet, um eine unabhängige Steuerung zu gewährleisten. Die Ergebnisse werden visualisiert bzw. kann auch ein Datenaustausch zum ABC-IS erfolgen. Die Daten werden dabei in Form von Shape Files übergeben.

Das Sensorikpaket besteht aus den beiden Sensoren LiDAR-Sensor und Gamma-Sonde, einem Kommunikationssystem, um den Datenaustausch zu bewerkstelligen, sowie einem Datenmanagementsystem, um Messwerte in voller Auflösung bereits on-board zu sichern.

Das Analysepaket besteht aus einem Kommunikationssystem für den Datenaustausch mit der Sensorik und dem Export von Ergebnissen an Informationssysteme, einem Datenmanagementsystem zur Sicherung der Messdaten und Ergebnisse, sowie mehreren Softwaremodulen zur Auswertung der Messdaten, Erstellung der Lagebilder und Berechnung von Flugmanövern.

Betreffs des Sensorikpaket und Integration am ULFZ 1 wird wie folgt vorgegangen.

Modulares Sensorikpaket:

Bei dem Sensorikpaket handelt es sich um eine modulare Einheit bestehend aus Sensoren und Modulen für Datentransport und -Übertragung:

- Laserscanner (im Falle eines ULFZ 1)
- Gamma-Sonde
- Recheneinheit + Software für die Datenvorverarbeitung an der Trägerplattform
- Modul für die Datenübertragung über einen Funkkanal (Funkmodul)
- Bodenstation für den Datenempfang

Alle Komponenten des Sensorikpakets sind aufeinander abgestimmt. Das Sensorikpaket kann demnach auch auf anderen Trägerplattformen eingesetzt werden. Schnittstellen nach außen bestehen für die Gamma-Sonde. Diese bezieht die Koordinaten der Messungen von einer externen GPS-Antenne. Des Weiteren ist eine externe Energieversorgung notwendig.

Die mechanische Integration sollte immer auf die Trägerplattform (Helikopter, Auto, etc.) abgestimmt werden. Dafür eignet sich die Montageplatte des Sensorikpakets, welche dem Betreiber einige Montagemöglichkeiten bietet. Zusätzlich muss die Dämpfung des Sensorikpakets berücksichtigt werden, um keine unnötigen Schwingungen in das System zu bringen.

Eine Trägerplattform besteht also erfindungsgemäß aus einem autonom oder semi-autonom beweglichen, motorisierten Fahrzeug, an welchem in vorbestimmter Höhe zum Schwerpunkt und/oder Abstand zum Boden 7, auf welchem die Trägerplattform steht, eine Gamma-Sonde und optional ein LiDAR-System angebracht sind. Ferner ist auf der Trägerplattform, die ein Landfahrzeug wie etwa eine Raupe, ein zwei-, drei- oder mehrachsiges Radfahrzeug, ein Helikopter oder eine Drohne sein kann eine oder mehrere computerartige Rechnereinheiten angeordnet, welche Messdaten der Sensoren/Sonden verarbeiten und über einen Sender an eine Bodenstation übertragen. Die Bodenstation kann jedes elektronische und kommunikationsfähige Klein- oder Standgerät sein, das während der Spürfahrt oder des Spürflugs unbewegt am Ort eines Operators verbleibt und die ausgewerteten Messdaten diesem über einen Bildschirm oder eine Datenausgabestelle zugänglich macht. Die genannten Elemente an der Trägerplattform sind modular aufgebaut und an ihr befestigt. Wenn die Trägerplattform ein ULFZ 1 ist, dann ist es zweckmäßig, wenn die Module unterhalb des Schwerpunktes befestigt sind und die Stützvorrichtungen wie Landebeine, Füße, Schienen oder Räder in Berücksichtigung des Gewichts und der Schwerpunktverlagerung verstärkt und/oder verlängert sind.

Integration:

Für die mechanische Integration des Gammasensors wurde eine Adapterplatte und Ringe gewählt, welche den Sensor umschließen und an die Adapterplatte bzw. das LiDAR-Sensorsystem anschließen. Wobei das LiDAR-Sensorsystem bereits über eine entsprechende Vorrichtung zur Ankopplung an den RiCOPTER-M verfügt. Alternativ kann noch eine Stereokamera (z.B. ein Doppel-Kamerasystem oder ein System aus mehreren Kameras) in der Ausrichtung oblique mitgeführt werden, um Bild- und Videoaufnahmen zu Kontrollzwecken (ebenso in Echtzeit, aber auch aufnehmbar) bereitzustellen.

Die gesamte Payload (Nutzlast) wird durch den Einsatz von speziellen Alpha-Gel Dämpfern auf Druck belastet. Dadurch ergibt sich eine nahezu schwingungsfreie Datenaufzeichnung. Durch die vier Montagebolzen ist die Stabilität und Aufhängung der ca. 10 kg schweren Payload gegeben.

Da sich mit der Gamma-Sonde die Aufbauhöhe erhöht hat, sind einige Veränderungen am ULFZ 1 vorgenommen worden, die Landebeine wurden verlängert, um genügend Bodenfreiheit bei der Landung zu haben.

Beispielhafte Gewichtsaufstellung:

- ULFZ 1 (z.B. "RiCOPTER-M") Leergewicht: 15.00 kg
- Sensorikpaket: 9.25 kg
- Verlängerungen Landebeine und Datenübertragungstechnik: 0.50 kg

Das Verfahren zur Erstellung u.a. einer Verstrahlungskarte berücksichtigt Aspekte der Daten, der Hintergrundstrahlung sowie des Strahlungsmodells selbst.

Hinsichtlich der Daten werden kurz die physikalischen Messgrößen für Gamma-Daten (Daten der Gammastrahlung) und 3D LiDAR beschrieben.

- Gamma-Daten

Die Gamma-Sonde erfasst Radioaktivitätsmesswerte in CPS (Counts per second), die Dosisrate in $\mu$Sv/h, sowie das Spektrum. Hierbei ist zu beachten: Die Radioaktivitätsmesswerte müssen nicht in Äquivalenzdosisleistung angegeben werden. Es genügt eine Angabe in CPS. Die Umrechnung in Dosisleistung in $\mu$S/h erfolgt innerhalb des Rechenmodells unter Berücksichtigung des Nuklids/Spektrum sowie einer durch den Hersteller zur Verfügung gestellten Kalibrierfaktors. Diese Daten werden im Sekundenintervall über das UAV zur Basisstation übertragen. Das Intervall ist jedoch einstellbar und kann daher verlängert oder verkürzt werden. Das Sekundenintervall dient dem Erreichen des Ziels, Endergebnisse in Echtzeit herauszugeben. Innerhalb einer Sekunde kann ein Messwert aufgenommen, gesendet, mit weiteren Daten zusammengefasst und in einem Modell zusammen mit bisherigen Messwerten verarbeitet und (ggf. graphisch) dargestellt werden. Ein menschlicher Operator empfindet eine sekündliche Aktualisierung einer Datenauswertung als in Echtzeit stattfindend.

Zusätzlich erfolgt durch Anbindung des UAV GPS Moduls an die Gamma-Sonde eine Echtzeit Verortung der Messwerte. Dadurch werden jedem Gamma-Datenpaket ebenso die Weltkoordinaten und einen Zeitstempel hinzugefügt, die den genauen Ort und Zeitpunkt der Messung definieren.

Physikalisch erfolgt die Messung der CPS, welche auch auf das Spektrum zutrifft, durch Integration über die Zeit. Folglich bezieht sich eine Messung, die zu einem bestimmten Zeitpunkt und Ort verankert ist, stets auf den gesamten Bereich und die Zeitspanne zum vorhergehenden Messpunkt. D.h. während der Bewegung des UAVs kommt es abhängig von der Geschwindigkeit zu einer gewissen Unschärfe in der Zuordnung des exakten Ortes der Messwerte, dem jedoch durch die hohe Messfrequenz entgegengewirkt wird.

- 3D LiDAR

Der Laser-Scanner nimmt 3D Punkte des abgetasteten Bereichs mit den Koordinaten, den genauen Zeitstempel und weiteren Eigenschaften auf. Diese Punkte können dazu verwendet werden ein 3D Geländemodell zu erstellen.

Insbesondere erlauben diese Messungen gemeinsam mit den Navigationsdaten des UAVs die Bestimmung der exakten Flughöhe h während einer Messung, wodurch sich bspw. der genaue Abstand zum Boden 7 der Gamma-Messungen bestimmen lässt.

Hinsichtlich des Hintergrund-Strahlenmodells wie in Fig. 2 gezeigt geht es darum, bekannte Störeffekte zu berücksichtigen.

Um die Strahlungswerte (in Fig. 2 als $\mu_{Air}$ bezeichnet) am Boden 7 von rohen Messungen bestimmen zu können, ist es zunächst wichtig Klarheit darüber zu erlangen, aus welchen Faktoren sich ein Messwert (prinzipiell jede beliebige Position im Raum) zusammensetzt.

Grundsätzlich kann festgehalten werden, dass die vom Messgerät registrierte radioaktive Strahlung $N$ gemessen in Zählrate pro Sekunde (counts per second, CPS) sich wie in Fig. 2 dargestellt aus der Summe der Zählrate aus einer oder mehrerer (zu messender) Quellen $N_S$ und sämtlichen sonstigen Einträgen des Strahlungshintergrunds $N_H$ bildet. Letztere sind eine im Wesentlichen stets vorhandene Strahlenbelastung (Nulleffekt).

$$N = N_S + N_H$$

Die radioaktive Strahlung des Hintergrunds kann mehrere Ursachen haben. Zu den wichtigsten zählen:

- Natürliche terrestrische Hintergrundstrahlung (Fig. 2: $SDI_{Back}$),
- Kosmische Hintergrundstrahlung ($SDI_{Cosmic}$),
- Natürliche Strahlung von Baumaterialien, z.B. der Trägerplattform ($SDI_{Vehicle}$),

Im Rahmen der Erfindung und den verwendeten Rechenmodellen setzt sich die Hintergrundstrahlung aus terrestrischer, kosmischer und der genannten eigen Strahlung zusammen.

Für die Trägerplattform werden keine strahlenden Baumaterialien verwendet, daher kann dieser Term vernachlässigt werden. Weiterhin ist die kosmische Hintergrundstrahlung nur für sehr große Höhen bzw. Höhenunterschiede relevant. Aufgrund der geringen Flughöhe h des ULFZ 1 während der Testflüge (<150m), kann die kosmische Hintergrundstrahlung im Rahmen der Erfindung vernachlässigt, bzw. als konstanter Bestandteil der Hintergrundstrahlung betrachtet werden. Den größten Faktor bildet somit die höhenabhängige terrestrische Hintergrundstrahlung.

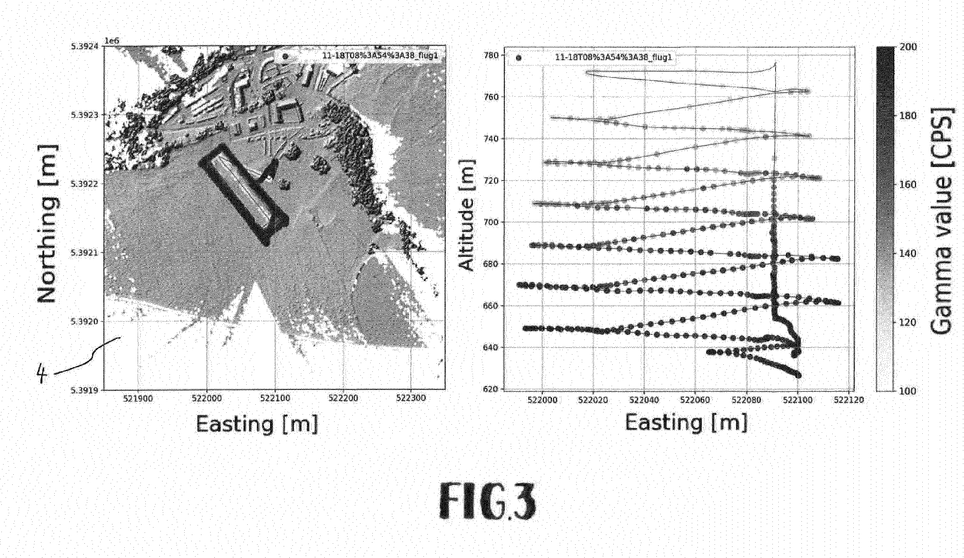

Aus diesem Grund wird der Ansatz gewählt, dass ein Kalibrierflug (vor dem eigentlichen Messflug) wie z.B. in Fig. 3 gezeigt sinnvoll ist, um den Strahlungshintergrund zu erfassen. Dieser Flug muss ohne Quelle 2, bzw. außerhalb des Einflussbereiches einer Quelle 2 durchgeführt werden. Dazu wird ein Steig- und Sinkflug bis zumindest 100 m über Grund oder auf etwa typische Einsatzflughöhe geflogen. Fig. 3 (linker Teil) ist eine Draufsicht auf die Karte eines Geländes, das als unbelastet bekannt ist. Das ULFZ 1 beschreibt dabei wiederholt ein Rechteck in unterschiedlichen Höhen, wobei die Höhenebenen in Fig. 3 (rechter Teil) dargestellt sind. Es ist zu erkennen, dass die Strahlung zwischen Flughöhen von etwa 640 m bis 780 m abnehmen, da der Einfluss kosmischer Höhenstrahlung hier noch nicht relevant ist, sondern die Abnahme der Effekte der Bodenstrahlung vorherrscht.

Wichtig ist, dass der Auf- und Abstieg möglichst gleichförmig mit einer Vertikalgeschwindigkeit von ca. 1 m/s erfolgt, um über alle Höhen verteilt Messwerte zu erhalten. Aus flugtechnischer Überlegung können auch andere Flugmuster, z.B. treppenförmig gewählt werden.

Ein Messflug erfolgt aus praktischer Sicht immer in unterschiedlichen Höhen über Grund (selbst bei konstanter Flughöhe h über Meereshöhe, AMSL - "above mean sea level"), abhängig vom Gelände. Die Erstellung des Hintergrundmodells hat den Zweck, in der gemessenen Strahlung den für die jeweilige Höhe korrekten Anteil der Hintergrundstrahlung zu bestimmen und folglich diesen Anteil zu kompensieren, um den Anteil der künstlichen Strahlung (bzw. der zu messenden Quellen 2) ermitteln zu können.

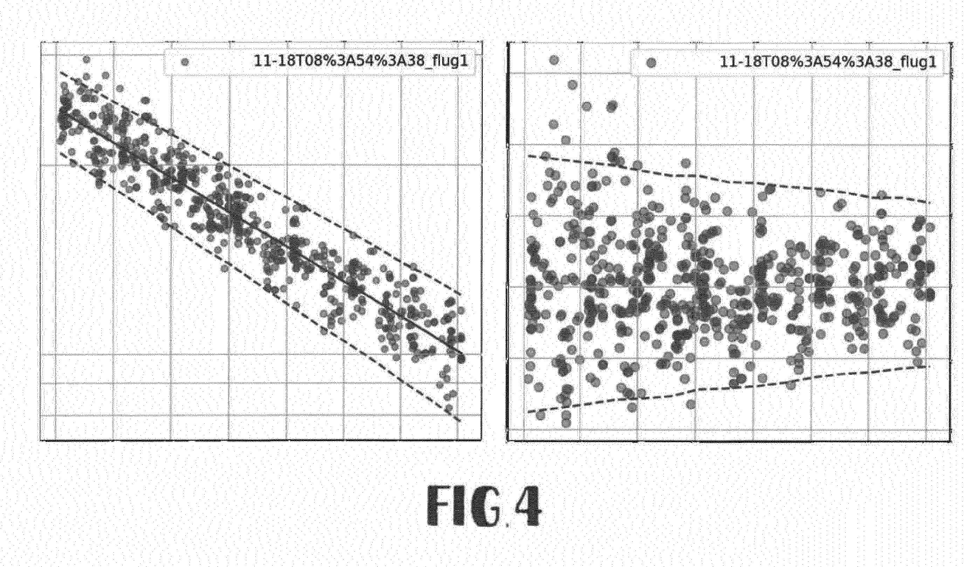

Dazu werden die Gammadaten des Kalibrierflugs in Abhängigkeit der Höhe über Grund betrachtet (Fig. 4). Das Hintergrund-Strahlungsmodell wird durch logarithmische Regression über die gemessenen Gammawerte (durchgehende Linie in Fig. 4, linker Teil) bestimmt. D.h. die Hintergrundstrahlung nimmt näherungsweise für betrachtete Flughöhen exponentiell ab. Dieses Modell zeigt über alle Kalibrierflüge hinweg eine hohe Übereinstimmung mit den tatsächlich gemessenen Werten.

Deutlich ersichtlich ist in Fig. 4 eine weitere Eigenschaft der radioaktiven Strahlung: Der radioaktive Zerfall ist ein stochastischer Prozess der näherungsweise einer Poisson-Verteilung folgt (siehe G. F. Knoll, Radiation detection and measurement. John Wiley & Sons, 2010). Diese beschreibt damit die Häufigkeitsverteilung der gemessenen Zählraten pro Sekunde. Demnach ist die diskrete Wahrscheinlichkeit eine bestimmte Zählrate $k$ von einer Quelle mit einer mittleren Aktivität $I = \lambda$ zu messen, entsprechend folgender Formel gegeben:

$$f(k, \lambda) = \frac{\lambda^k * e^{-\lambda}}{k!}$$

Für große $\lambda$ nähert sich diese Verteilung der Gausschen Verteilung (siehe Towler, J., Krawiec, B., Kochersberger, K. (2012), "Radiation Mapping in Post-Disaster Environments Using an Autonomous Helicopter", in: Remote Sensing, 4(7), S. 1995-2015. doi: 10.3390/rs4071995) mit den Parametern $\mu = \sigma^2 = \lambda$. Somit kann die Hintergrundstrahlung (jede emittierte Strahlung) als stochastischer Prozess, der Poisson Verteilung folgend, beschrieben werden, wobei als mittlere Zählrate $\lambda$, die für den jeweiligen Ort (Höhe) bestimmte mittlere Hintergrundstrahlung verwendet wird.

Es gelten folgende Kenngrößen: $E(X_{poisson}) = E(X_{poisson}^2) = \lambda$, wobei $X_{poisson}$ die Messwerte, $\lambda$ die mittlere Messgröße und $E(X)$ bzw. $E(X^2)$ der Erwartungswert, bzw. die Varianz sind. Folglich kann die Streuung als $\sigma = \sqrt{\lambda}$ angegeben werden. In

Fig. 4 sind die Perzentile für 0,01 und 0,99 angegeben (strichlierte, "einhüllende" Linien) und zeigen somit jenen Bereich an innerhalb dessen 98% der Hintergrundstrahlung zu erwarten sind.

Hinsichtlich des Strahlungs-Modells geht es darum, alle genannten Faktoren in ein Schema zu bringen und schließlich aus den Rohdaten der Radioaktivitäts-messungen aussagekräftige Endwerte zu errechnen. Um aus den gemessenen Radioaktivitäts-Werten in der Luft auf einen Quellenursprung oder die Verstrahlung am Boden 7 schließen zu können, ist es zunächst wichtig zu verstehen, aus welchen Faktoren sich die Messwerte zusammensetzen, und wie dieser Prozess modelliert werden kann. Das Strahlungs-Modell beschreibt daher die zu erwartende Strahlungsleistung unter Berücksichtigung aller bisher genannten physikalischen Parameter an einem bestimmten Punkt, welche sind:

- Hintergrundstrahlung,

- Effekt der Attenuation,

- Abstandsquadratgesetz der Strahlung allgemein (quadratisches Abstandsgesetz oder auch "Inverse Square Law"),

- stochastische Verteilung.

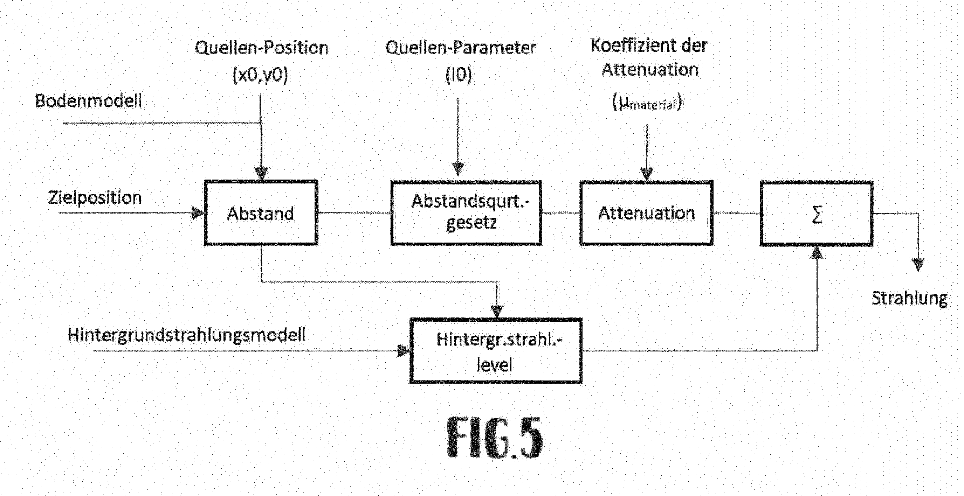

D.h. bei bekannten Parametern zu Quelle 2, Hintergrund, etc. ist es mit diesem Modell möglich, die gemessenen Gammawerte in der Luft zu beschreiben, wobei hier bereits das 3D Gelände miteinbezogen wird. In den Verfahren wird das in Fig. 5 dargestellte Modell zur Berechnung von Strahlenwerten in der Luft angewendet.

Über die Zielposition (Messpunkt) in Weltkoordinaten und dem Geländemodel bzw. zusätzlicher Quellenpositionen, können die Höhe über Grund bzw. die Entfernung zur Quelle 2 ermittelt werden. Die Quellenstärke wird über die Attenuation und dem quadratischen Abstandsgesetz reduziert. Die verbleibende Strahlenstärke wird anhand der Poisson Verteilung in eine stochastische Größe umgewandelt. Ähnlich wird für die ermittelte Höhe, die mittlere Hintergrundstrahlung berechnet und daraus wieder ein, der Poisson-Verteilung folgender, konkreter Wert berechnet. Beide Werte werden zum Gesamtwert addiert.

Die Verfahrensschritte wurden bereits wie folgt evaluiert.

Eine große Herausforderung bei der Entwicklung der Verfahren besteht darin, die Sensordaten mit derart geringer Verzögerung auszuwerten, dass Ergebnisse über eine Verstrahlung bereits nach sehr kurzer Zeit vorliegen und visualisiert werden können. Noch während der Copter fliegt und mit dem Sensorikpaket neue Gebiete sensorisch erfasst werden, sollen kontinuierlich, d.h. in Echtzeit, die dabei aufgenommenen Daten ausgewertet und visualisiert werden. Aufgrund der Komplexität der Berechnungen ist eine umfassende Auswertung in Echtzeit nur mit erheblichem Aufwand zu erreichen. Die Erfindung erreicht dies aber, indem zwei Verarbeitungswege konzipiert sind. Der erste Verarbeitungsweg ist darauf ausgelegt, die Messdaten zu analysieren und die Radioaktivitätswerte in Echtzeit als Flächenverstrahlung am Geländemodell auszugeben. Hierbei handelt es sich um eine qualitative Analyse der Radioaktivitätswerte. Diese dient zur Abschätzung der Quellenposition(en) und dem ungefähren Ausmaß der Verstrahlung. Im zweiten Verarbeitungsweg werden die Berechnungen zur genauen Quellenlokalisierung durchgeführt und anschließend die Verstrahlungskarte quantitativ ermittelt. Die Radioaktivitätswerte werden dabei in Dosisleistung in Sv/h am Boden 7 umgerechnet.

Aus Sicht des Anwenders wird mit der Echtzeitauswertung zur qualitativen Bestimmung der Radioaktivitätswerte am Boden 7 eine Groberkundung durchgeführt. Dadurch, dass die Dauer von der Datenaufnahme bis zur Visualisierung der Ergebnisse auf unter 1 min reduziert werden konnte, ermöglicht dies unmittelbar auf erhöhte Strahlenmesswerte zu reagieren, das Flugmuster im Bedarfsfall zu adaptieren und außerdem zusammengesetzte Luftspürverfahren situationsabhängig umzusetzen. Mit dem zweiten Verarbeitungsweg wird die Detailerkundung realisiert, dieses erlaubt die Lokalisierung der Quelle(n) 6 und die Abschätzung der Strahlungsstärke(n) sowie die zur Personensicherheit wichtige Darstellung von Verstrahlungslinien, z.B.: die 10 μSv/h Dosisleistungsgrenze im Gelände.

Die Datenaufbereitung gestaltet sich wie folgt.

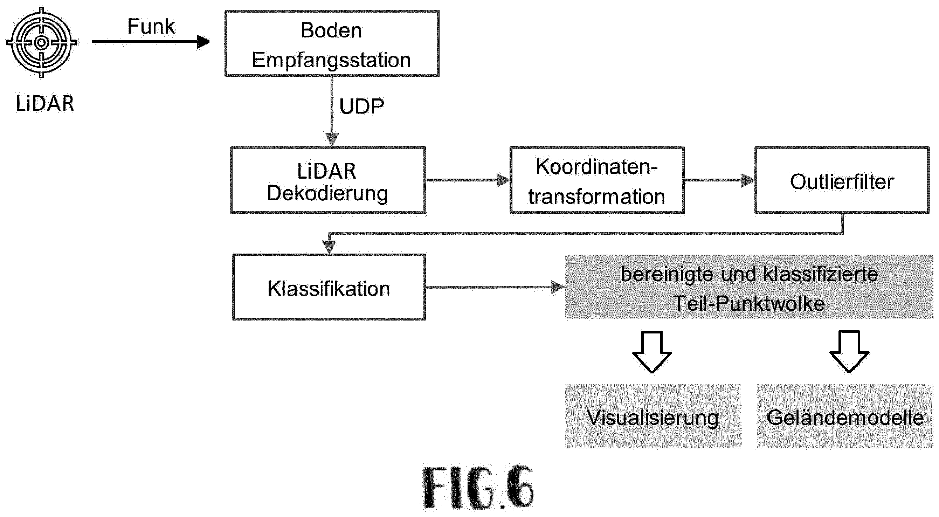

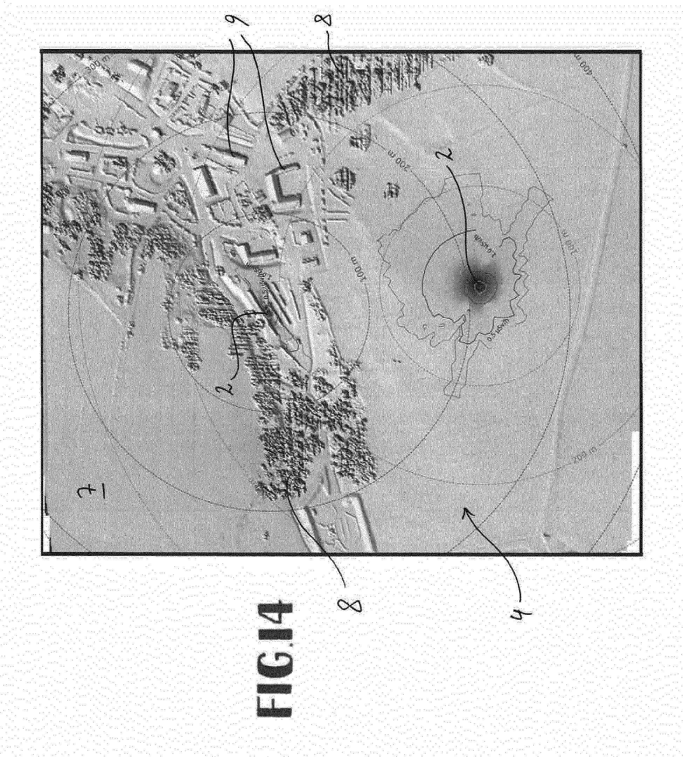

Zunächst sind die Laserdaten in Echtzeit aufzubereiten. Gemäß Fig. 6 liegt der Datenstrom vom LiDAR-Sensor (Laserscanner) bis zur listenförmigen oder visuellen/graphischen Ausgabe der Ergebnisse; dazwischen liegen die Verarbeitungsschritte. Es ist ermittelt worden, dass eine graphische Ausgabe von verarbeiteten Messwerten in Form von Höhenschichtlinien auf einem Abbild der Karte sehr schnell und genau von einem Operator erfasst und ausgewertet werden kann (siehe z.B. Fig. 14).

Bei der Datenübertragung vom LiDAR zur Boden-Empfangsstation handelt es sich um einen ausgekoppelten Monitoring-Datenstrom mit reduzierter Punktdichte gegenüber dem originalen Messdatenstrom. Damit wird eine Überlastung der Funkstrecke vermieden, so dass die Lasermessdaten mit kontrollierter und gleichbleibender Punktdichte ohne Verzögerung übertragen werden können. Der Datendurchsatz ist einstellbar über verschiedene Parameter, dazu gehören die Einstellungen des LiDAR selbst, wie z.B. die Schussfrequenz, als auch Parameter der Monitor-Datenstrom Auskopplung, z.B. Übertragung jeder x-ten Zeile, jedes x-ten Punktes. Ziel der Ausdünnung ist es, die Datenbandbreite maximal auszunutzen, um für die weitere Verarbeitung eine möglichst hohe Punktdichte zu erzielen, ohne jedoch die Kapazitätsgrenze zu überschreiten. Die Laserdaten wurden derart ausgedünnt mit einer Bandbreite von ca. 500 KB/s zur Bodenstation übertragen, dies entspricht etwa 25 kPkt/s, womit eine Bodenpunktdichte von ca. 20-40 Pkt/m$^2$ erreicht wird.

Die Laserdaten werden in Paketen zu UDP-Dataframe-Größe als UDP-Datenstrom übertragen. Da UDP ein verbindungsloses und ungesichertes Netzwerkprotokoll ist, führen mögliche Verbindungsunterbrechungen zu einem Datenverlust. Diese können jedoch toleriert werden, da hierbei mehrere Korrekturmechanismen greifen. Zum einen werden durch den großen Öffnungswinkel des Sensors Geländeabschnitte in der Regel mehrfach erfasst, zum anderen werden bei der Geländemodellierung etwaige Lücken interpoliert, wodurch das Ziel der Laserdatenaufbereitung, ein durchgängiges Geländemodell zu erstellen, erreicht wird.

Von der Empfangsstation empfangene Daten werden zunächst dekodiert (siehe UDP Datenformat in Spezifikation). Eine Fehlerkorrektur erlaubt es, unvollständig empfangene oder fehlerhafte Datenpakete zu erkennen und die betroffenen Daten entsprechen auszusortieren. Im Anschluss erfolgt eine Transformation der Koordinaten in ein metrisches System (EPGS:32633 - WGS 84 / UTM zone 33N; siehe https://epsg.io/32633), eine Filterung der Punktwolke, um verblieben Ausreißer zu entfernen und schließlich die Klassifikation der Punkte.

Das Ergebnis der Klassifikation ist eine Einteilung in vier Klassen (LAS Klassifizierungscodes; siehe https://www.asprs.org/wp-content/uploads/2010/12/LAS_Specification.pdf):

- Bodenpunkte, bzw. Boden 7 (ground)
- Vegetation 8 (Low, medium, high vegetation)
- Gebäude 9 (building)
- Rauschen (noise)
- Unklassifiziertes

Punkte der Klassen "Rauschen" und "Unklassifiziertes" werden herausgefiltert, da sie das Ergebnis stören können. Aus den Punkten der verbleibenden Klassen werden Geländemodelle erstellt.

Grundsätzlich sind klassifizierte Objekte im Rahmen der Erfindung hinsichtlich einer Abschattung radioaktiver Strahlung zu berücksichtigen, teilweise auch hinsichtlich einer Reflexion, selten auch hinsichtlich einer Absorption. Jeder dieser Aspekte und die Berücksichtigung im Rechenmodell verbessert jedoch das angestrebte Endergebnis, nämlich sowohl die Lokalisierung von Quellen, als auch die Quantifizierung der Dosisleistung am Boden 7.

- Bodenfilter

Als Bodenfilter wird eine Methode - Simple Morphological Filter (SMRF, siehe Pingel, Thomas J., Keith C. Clarke, William A. McBride, "An Improved Simple Morphological Filter for the Terrain Classification of Airborne LIDAR Data", in: ISPRS Journal of Photogrammetry and Remote Sensing 77 (2013), S. 21-30.) - basierend auf morphologischen Bildverarbeitungs-Algorithmen eingesetzt. Die Implementierung verwendet dabei stetig größer werdende Regionen zusammen mit Parameter zur Begrenzung der Steigungen und Bildrekonstruktionsmethoden.

- Vegetation

Der Vegetationsfilter macht sich die Eigenschaft zu Nutze, dass Vegetationspunkte in ihrer räumlichen Verteilung stärker streuen als Punkte des Bodens 7 oder anderer Objekte. Um Vegetationspunkte zu identifizieren, werden daher aus der Kovarianzmatrix der n-nächsten Nachbarn eines Punktes die Streuung berechnet. Punkte mit erhöhter Streuung werden als Vegetationspunkte klassifiziert.

- Gebäude

Auf ähnliche Weise zeichnen sich Gebäudepunkte durch besondere Eigenschaften in der räumlichen Verteilung aus. Im Allgemeinen weisen solche Punkte eine hohe Koplanarität und im Fall von z.B. Gebäudemauern, zusätzlich eine hohe vertikale Vorzugsrichtung aus. Diese Eigenschaften werden herangezogen, um Gebäudepunkte zu klassifizieren.

Fokus bei allen eingesetzten Filtern liegt in der effizienten Berechnung, um für die Laserdaten-Aufbereitung Echtzeitfähigkeit zu erreichen. Demgegenüber spielt die Erreichung einer sehr hohen Genauigkeit in der Klassifizierung eine untergeordnete Rolle spielt, da die daraus abgeleiteten Geländekarten nur geringe Unterschiede aufweisen würden, die sich wiederum bei der Berechnung der Dämpfung der Strahlenausbreitung kaum auswirken.

- Gamma-Daten Aufbereitung in Echtzeit

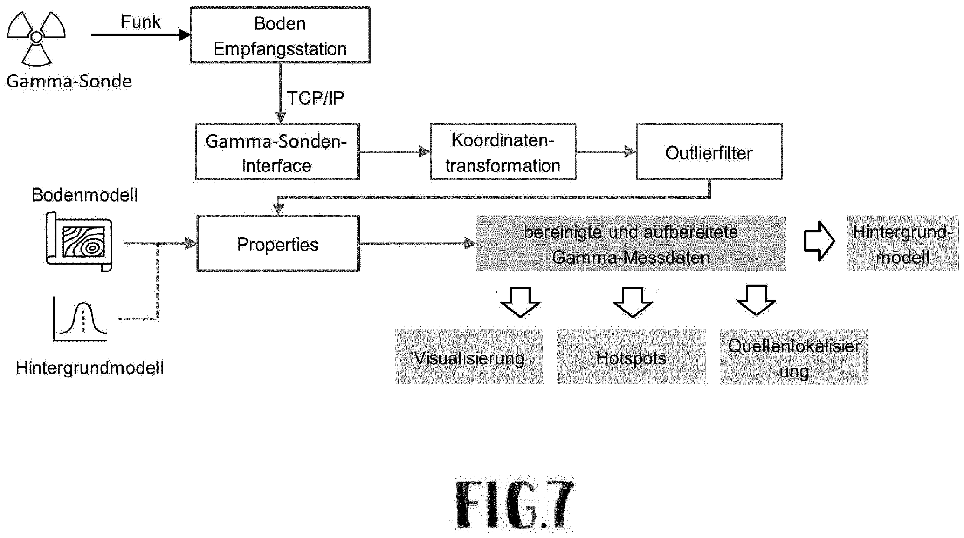

Die Gamma-Sonde misst gemäß Fig. 7 Radioaktivitätswerte und übermittelt diese in einem einfachen Datenprotokoll (ASCII, json kodiert, HTTP). Von der Sonde können unter anderem folgende Größen erfasst werden:

- Radioaktivität in CPS

- Spektrum mit 2048 Kanäle in 1 keV Auflösung

- Dosisleistung gemittelt über mehrere Sekunden

Diese Messgrößen werden zusammen mit den eingespeisten GPS-Informationen - Zeitstempel und Koordinaten - im Sekundenintervall ausgegeben. Datenumfang und Intervall sind gegenüber den Laserdaten deutlich geringer und fallen somit bei der Übertragungsleistung nicht ins Gewicht.

Für die Datenübertragung wurde das TCP/IP Netzwerkprotokoll gewählt, welches eine Punkt-zu-Punkt Verbindung zwischen zwei Endpunkten ermöglicht und eine verlustfreie Übertragung zulässt. Damit wird erreicht, dass kurzzeitige Verbindungsunterbrechungen zu keinem Datenverlust führen. In Falle eines Verbindungsabrisses werden die bis dahin angefallenen Daten bei Wiederaufnahme der Verbindung automatisch übermittelt.

In ähnlicher Weise wie bei der Aufbereitung der Laserdaten erfolgt zunächst eine Konvertierung der Daten mit Koordinatentransformation in ein metrisches System und anschließender Filterung von Mess-Ausreißern. Um die Gamma-Daten zur Berechnung der Strahlenausbreitung verwenden zu können, müssen weitere Parameter berechnet werden. Neu berechnete Werte sind unter anderem:

- Höhe über Grund: Die Koordinaten geben die Höhe über den mittleren Meeresspiegel (AMSL) an. Zur Berechnung der Höhe über Grund wird bereits die aktuelle Geländekarte verwendet.
- Residuum in der Luft: ein vom Strahlungs-Hintergrund befreiter Radioaktivitätswert. Hierzu wird das Hintergrundmodell verwendet.
- Residuum am Boden 7: die Radioaktivitätswerte ohne Hintergrund werden auf den Boden 7 projiziert.
- Wahrscheinlichkeit für Nicht-Hintergrund: diese drückt die Wahrscheinlichkeit aus, dass der jeweilige Messwert zur Hintergrundstrahlung gehört. Umgekehrt formuliert ist es eine Maßzahl dafür, dass ein bestimmter Messwert bei ansonsten gleichen Bedingungen nicht von der Hintergrundstrahlung herrührt und somit auf eine zusätzliche (nicht natürliche) Strahlenquelle hindeutet.

- Anwendung des Hintergrundmodells

Das Hintergrundmodell wird in der Aufbereitung der Gammadaten in zwei Schritten dazu verwendet den Nulleffekt (in der Luft gemessen Strahlung, die ausschließlich vom Strahlungshintergrund herrührt) der gemessenen Strahlung zu eliminieren (Residuum der Strahlung), um die Strahlungsgröße zusätzlicher Quellen sowie eine zugehörige Maßzahl bestimmen zu können, welche für die Berechnung der Hotspots und Quellenlokalisierung verwendet werden.

Schritt 1: Entfernen des Hintergrunds:

Zunächst wird durch einfache Subtraktion der mittlere Hintergrund vom gemessenen Strahlungswert abgezogen, um den Strahlungsvordergrund zu bestimmen. Zu beachten ist, dass hierbei immer der für die jeweilige Flughöhe h ermittelte Wert verwendet wird, die wie vorhin gezeigt mit zunehmender Höhe abnimmt. Erhöhte Messwerte in niedriger Flughöhe, wie sie bei Start und Landung des Copters auftreten werden auf diese Weise bereits entsprechend reduziert.

Schritt 2: Berechnen der "Quellen-Maßzahl":

Diese Maßzahl misst im Wesentlichen, um welches Vielfaches der Messwert die Schwankungsbreite der Hintergrundstrahlung übersteigt. Da die Schwankungsbreite der Hintergrundstrahlung im Zusammenhang mit einer Wahrscheinlichkeit steht, kann diese Kennzahl als eine Wahrscheinlichkeit für das Vorhandensein einer zusätzlichen Quelle interpretiert werden, wenngleich der Wertebereich alle positiven Zahlen einschließlich 0 umfasst.
Zur Berechnung wird die im Hintergrundmodell besprochene Streuung berücksichtigt, indem das Ausmaß der über das 99 Prozent Perzentil hinausgehende Anteil nach folgender Formel ermittelt wird.

$$s_i = \frac{R_i}{bg(h_i)_{0,99} - bg(h_i)_{0,5}} - 1$$

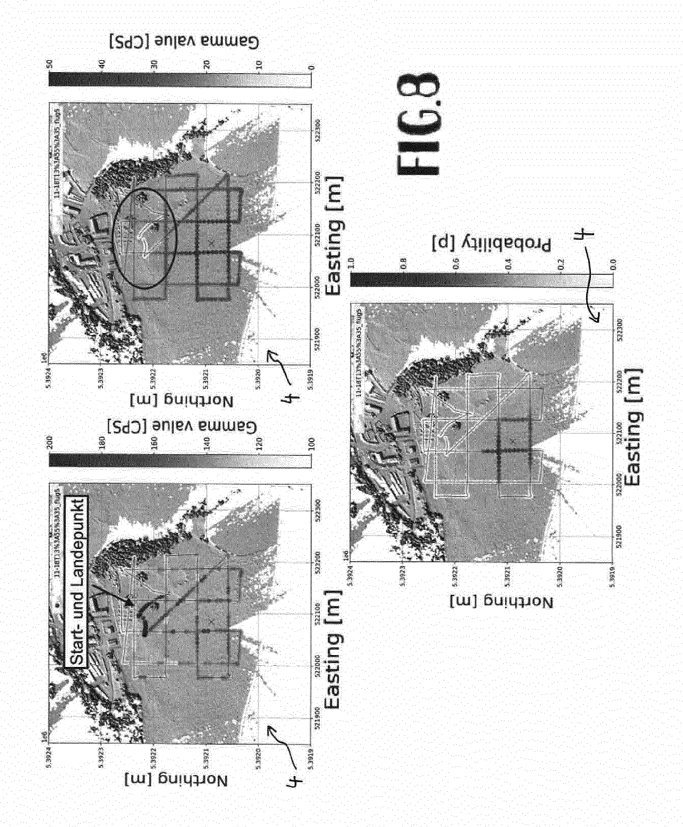

mit $s_i$ die Vordergrund-Kennzahl des i-ten Messwertes, $R_i$ das Residuum, also der geglättete Messwert ohne Hintergrund und $bg_{0,99}$, $bg_{0,5}$ sind die Perzentile des Hintergrundmodells in entsprechender Höhe, wobei das 0,5 Perzentil dem Erwartungswert (Mittelwert) entspricht. D.h. Messwerte bis zum bzw. innerhalb des Bereichs der 99% der Hintergrundstrahlung darstellt führen zu einer Quellen-Maßzahl von $s_i = 0$, Messwerte, die darüber liegen führen mit zunehmendem Abstand zu höheren Werten.
Erhöhte Residuen (wie in unterer Abbildung in Fig. 8, nördlicher Teil der Flugtrajektorie) weisen trotzdem noch eine geringe Maßzahl auf, wenn sie innerhalb oder nahe der Hintergrundbandbreite liegen.
Fig. 8 zeigt also eine Anwendung des Hintergrundmodells. Die originalen Messdaten entlang der Flugtrajektorie (oben links) weisen naturgemäß wie die Hintergrundstrahlung eine Streuung auf; oben rechts ist das Residuum, geglättet gezeigt. Die Wahrscheinlichkeit einer zusätzlichen Quelle 2 ist im unteren Bildteil angegeben. Die tatsächliche Quellenposition ist dann mit x markiert.
Nun zum Geländemodell. Aus der Punktwolke werden auf Basis der Klassifizierung drei unterschiedliche Geländemodelle konstruiert.

- Bodenmodell

Es umfasst nur Punkte mit der Klassifizierung Boden 7 ("Ground"), Gebäude 9 und Vegetation 9 sind nicht enthalten. Das Bodenmodell wird interpoliert, um Lücken zu schließen. Es wird herangezogen, um die Flughöhe h über Grund zu berechnen bzw. bei der Erstellung des Verstrahlungsmodells verwendet.

- Vegetationsmodell

Es beinhaltet Punkte des Bodens 7 und der Vegetation 8. Das Modell wird über kurze Distanzen interpoliert, um kleine Lücken zu schließen.

- Gebäudemodell

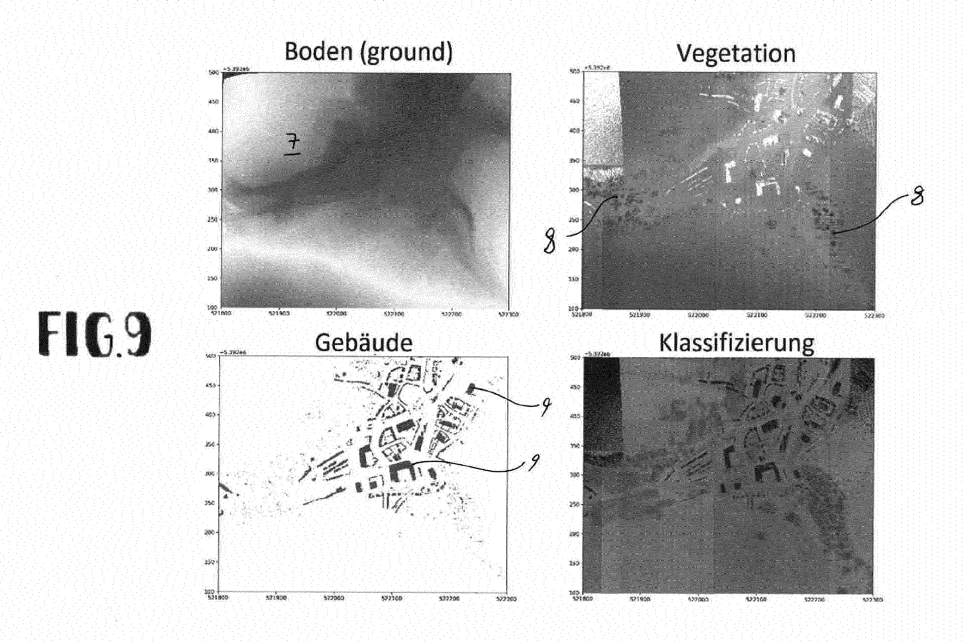

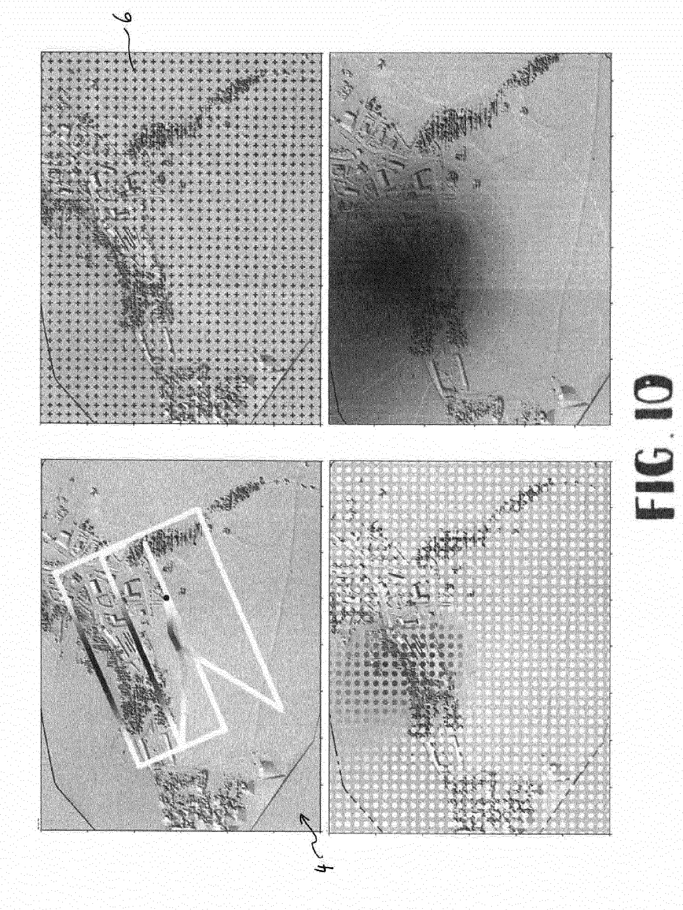

Es beinhaltet nur Punkt die als Gebäude 9 klassifiziert sind.
Das Vegetations- und das Geländemodell werden gemäß Fig. 9 für die Berechnung der Verstrahlung am Boden 7 verwendet, um bei der Strahlungsausbreitung spezifische Dämpfungskonstanten zu berücksichtigen. Fig. 9 zeigt die Karte für Boden 7 (oben links), die Vegetation inkl. Bodenpunkte (oben rechts) und Gebäude (unten links) und farbliche Darstellung der Klassifizierung (unten rechts).
Die Bestimmung der Hotspots am Boden 7 hat das primäre Ziel Quellen 2 im Raum bzw. auch entlang von Bewegungslinien zu detektieren. Das Verfahren zur Berechnung der Hotspots ist dabei mit besonderem Hinblick auf Performance konstruiert, so dass Ergebnisse in Echtzeit geliefert werden können.
Die Hotspot-Detektion berechnet laufend ausgehend von den aktuellen Daten - Geländekarte und Gamma - eine Interpolation des in der Luft gemessenen Verstrahlungsbildes auf Bodenniveau. Dabei wird jeder erhöhte Strahlungsmesswert, insbesondere Strahlungsspitzen, in gleicher Weise auf den Boden projiziert und anschließend über das gesamte Gelände interpoliert, wobei die bisher genannten Faktoren Höhe, Geländemodell und Hintergrundstrahlung, berücksichtigt werden. Damit ist ersichtlich, dass aus methodischer Sicht keinerlei Einschränkungen über Anzahl, Intensität oder Ursprung der gemessenen Strahlenquellen bestehen.
Zunächst werden die Residuen der gemessenen Intensitätswerte im selben Verhältnis wie die mittlere Hintergrundstrahlung auf Bodenniveau unter Berücksichtigung der Flughöhe h skaliert. Diese Kartenpunkte 6 bilden Stützpunkte für die anschließende Interpolation. Naturgemäß entstehen zwischen den Messpunkten der Trajektorie wie auch außerhalb der Trajektorie Lücken in der Fläche, für die keine Messwerte vorliegen. Um für diese Bereiche plausible Intensitätswerte zu bestimmen, wird ein zweistufiges Interpolationsverfahren gemäß Fig. 10 angewendet.

Stufe 1: Stützpunkte: Über das gesamte Gelände wird ein Raster gelegt (Fig. 10 oben rechts). Für alle Kartenpunkte 6 dieses Rasters werden Interpolationen der Stützpunkte (oben links) mithilfe des Kriging-Verfahrens berechnet (unten links, zum Kriging-Verfahren siehe Danie G. Krige: "A statistical approach to some basic mine valuation problems on the Witwatersrand", in: J. of the Chem., Metal. and Mining Soc. of South Africa. 52 (6), 1951, S. 119-139). Dieses Verfahren hat seinen Ursprung und Verwendung in der Geodäsie, wo es eingesetzt wird, ein Gelände auf Basis von Stützpunkten räumlich zu modellieren. Mathematisch zählt es zu den Gaußschen Prozessen, die in der Lage sind, Modelle aus unvollständigen Informationen (Beobachtungen) zu bilden und optimale Interpolationen zu bestimmen und besitzt damit Vorteile gegenüber deterministischen Methoden, wie z.B. die Inverse Distanzgewichtung.

a. Das Modell lässt auch höhere Interpolationen als die Messwerte zu, z.B. wenn die Quelle 2 zwischen zwei Überflügen liegt.
b. Clusterbildung bzw. ungleiche Verteilung von Messwerten können modelliert werden. Z.B. sind die Messwerte entlang der Trajektorie gleichmäßig, zwischen diesen und bei Wendepunkten, aufgrund der höheren Verweildauer des Copters an einer Position, hingegen sehr ungleichmäßig verteilt.

Stufe 2: Interpolation: Nach Interpolation an den Rasterpunkten, werden diese auf die Größe des Geländes mithilfe von Bildverarbeitungsmethoden bilinear interpoliert, um für jeden Kartenpunkt 6 einen Intensitätswert bestimmen zu können (Fig. 10 unten rechts).

Also zeigt Fig. 10 die Stützpunkte aus den Messwerten (oben links), Interpolationspunkte über dem Gelände (oben rechts), Interpolationen der Messwerte zur Hotspots-Detektion (unten links), sowie Skalieren der Interpolation auf das gesamte Gelände (unten rechts).

Im Rahmen der Erfindung ist ein Pseudo-Merkator z.B. eine WGS84/Pseudo-Mercator Projektion der Koordinaten in kartesische Koordinaten.

Dieses Hotspot-Verstrahlungsbild stellt somit eine qualitative Interpretation der Vordergrundstrahlung dar. Zu beachten ist vom Operator, dass dieses in keiner Weise die tatsächliche Verstrahlung auf Bodenniveau angibt, Das quantitative Verstrahlungsbild wird erst im Zuge der Quellenlokalisierung und Verstrahlungsberechnung ermittelt. Jedoch deuten lokale Intensitätsmaxima bereits auf die Positionen von Quellen 2 hin, was ein Verfahren ohne LiDAR-Daten bereits sinnvoll macht. Besonders nach oben hin freiliegende und teilweise abgeschattete Quellen 2 lassen sich mit diesem Verfahren bereits sehr effizient lokalisieren.

Die Quellensuche hat zum Ziel die Quellen genauer zu bestimmen. Für jede Quelle 2 soll individuell die Position und Stärke ermittelt werden. Hierin unterscheidet sich dieses Verfahren von der zuvor beschriebenen Hotspot-Detektion, indem der Ursprung der gemessenen Strahlung als von einer oder mehreren Punktquellen betrachtet wird. Die explizite Kenntnis über Position und Stärke der Quellen 2 kann einerseits zur Visualisierung verwendet werden, wird vor allem auch zur Berechnung des Verstrahlungsbildes andererseits herangezogen.

Ausgangspunkt der Berechnung ist der Zusammenhang zwischen den Messwerten und Strahlungsquellen über die Entfernung und Intensität der Quellen 2. Allgemein führt jede Strahlungsquelle zu einer (statistischen) Erhöhung der gemessenen Radioaktivität an einer bestimmten Position. D.h. ein Messwert setzt sich (wie im Hintergrundmodell ausgeführt) aus Hintergrundstrahlung und je nach Anordnung aus Einträgen sämtlicher Quellen zusammen. Aufgabe der Quellensuche ist es, für die Parameter dieses Zusammenhangs eine Lösung zu finden. Dazu wird ein Verfahren in zwei Schritten angewandt.

Schritt 1: Modellerstellung zur Berechnung der Radioaktivität: Es wird ein Modell erstellt, welches in der Lage ist, ausgehend von den Geländedaten und der Hintergrundstrahlung entsprechend den Strahlenausbreitungsgesetzen für eine hypothetische Quelle (charakterisiert durch Position und Stärke in CPS) die zu erwartende Radioaktivität für jeden beliebigen Punkt, insbesondere auch für jene der Trajektorie, zu berechnen. Das Radioaktivitätsmodell bestimmt also auf Basis der Geländekarte und hypothetischer Quelle als Eingangsparameter zu erwartende Radioaktivitätswerte an beliebiger (örtlicher) Stelle.

Schritt 2: Optimierung des Modells: Durch Variation der Modellparameter (Quellenposition(en), Quellenstärke(n)) wird eine Lösung gefunden, für die die Abweichung der zu erwartenden Radioaktivität zu der gemessenen Radioaktivität über alle Messwerte hinweg minimal ist. Im Sinne einer Fehlerminimierung werden demnach jene Modellparameter ermittelt, die die geringste Abweichung ergeben. Diese Modellparameter sind wie oben erwähnt die Quelle(n)-Position(en) und Stärke(n). Das Radioaktivitätsmodell wird also dazu verwendet, durch Variation der Modellparameter einen optimalen Abgleich der erwartenden Radioaktivität mit den tatsächlichen Messwerten herzustellen.

Bei der Modellierung der Radioaktivitätswerte (Schritt 1), werden neben der bereits diskutierten höhenabhängigen Hintergrundstrahlung das quadratische Abstandsgesetz und die Attenuation (Abschwächung) berücksichtigt.

Bei der Optimierung des Modells (Schritt 2) wird ein Suchverfahren mit Fehlerminimierung verfolgt. Mathematisch wird dieses als Minimierung einer Kostenfunktion dargestellt. Die Kostenfunktion ergibt sich dabei aus:

$$f(S, M) = err(S, M) + err_{reg} \rightarrow \min_{S} f(S, M)$$

mit $S$ sind die Quellenparameter Position und Stärke, $M$ die Messwerte samt Position, $err(S,M)$ der Fehlerterm, der die Diskrepanz zwischen den Messwerten und den erwarteten Intensitätswerten erfasst und $err_{reg}$ ein Regularisierungsterm, der verhindert, dass eine Überanpassung stattfindet.

Der Fehlerterm errechnet sich aus:

$$err_S = \sum_{i}^{M} mask_i \, (x(S, bg) - M_i)$$

$$mask_i = \begin{cases} 1 & x(S, bg) > bg_{0,99} \\ 0 & sonst \end{cases}$$

mit $x$ ist der erwartete Intensitätswert entsprechend dem Radioaktivitätsmodell (Schritt 1) mit der Quelle $S$ und der Hintergrundaktivität $bg$ und dem Messwert $M_i$. $mask_i$ gibt an, ob die Quelle 2 an der Position der Messung überhaupt einen Einfluss haben kann. Dies wurde so gewählt, dass wenn der erwartete Wert über dem 99% Perzentil des Hintergrunds liegt, ein Einfluss angenommen wird. Es beschreibt damit die Einflusszone der Quelle 2, welche hier im Fehlerterm dazu verwendet wird, eine sog. Lokalität herzustellen. Damit soll erreicht werden, dass weit entfernte Messpunkte - außerhalb der wirkreichweite der Quelle - keinen Einfluss auf das Ergebnis haben.

Im sog. Regularisierungsterm werden alle außerhalb der Wirkreichweite der Quelle 2 liegenden Messwerte zusammengefasst. Damit wird bewirkt, dass in der Optimierung solche Quellen zu einem geringeren Fehler führen, die tatsächlich auch einen Teil der Messwerte erklären können. Der Term berechnet sich folgendermaßen:

$$err_{reg} = \sum_{i}^{M} (1 - mask_i) * M_i$$

Die Optimierung führt nun den Schritt zur Minimierung $\min_{S} f(S, M)$ der Kostenfunktion durch. Hierbei wird zum Teil ein Brute-Force-Ansatz verfolgt, indem für ein Raster (vergleichbar mit jenem wie in der Hotspot-Detektion verwendet) von möglichen Quellenpositionen die Berechnung durchgeführt wird. Als Ergebnis entsteht eine Karte, die für jede Position des Geländes die Größe des Fehlers, sowie die optimale Stärke einer Quelle 2 an ebendieser Position angibt. Schließlich werden die Quellen so ausgewählt, dass diese an den Stellen der lokalen Minima der Kostenfunktion liegen.

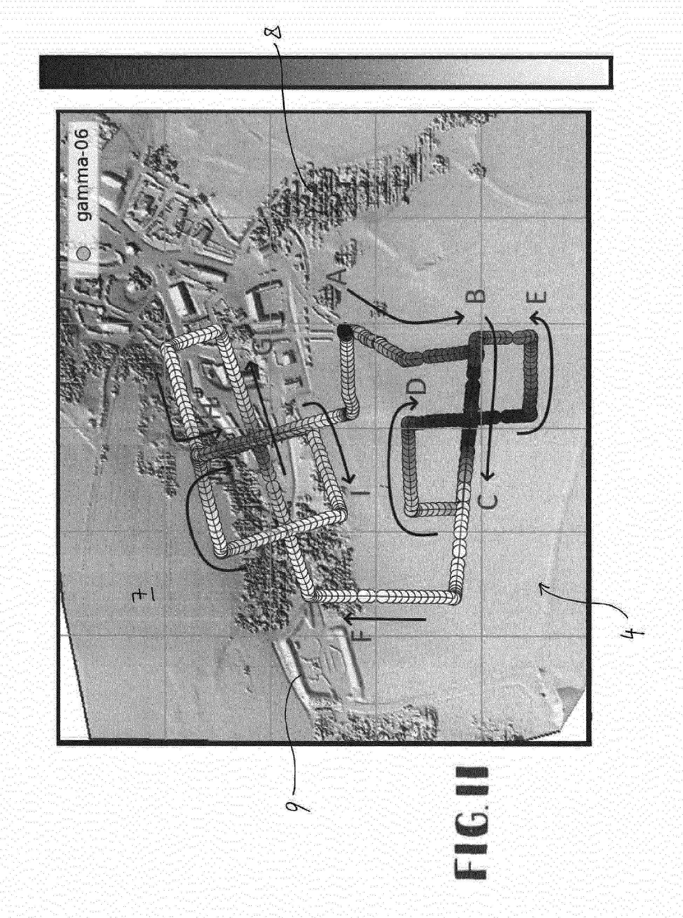

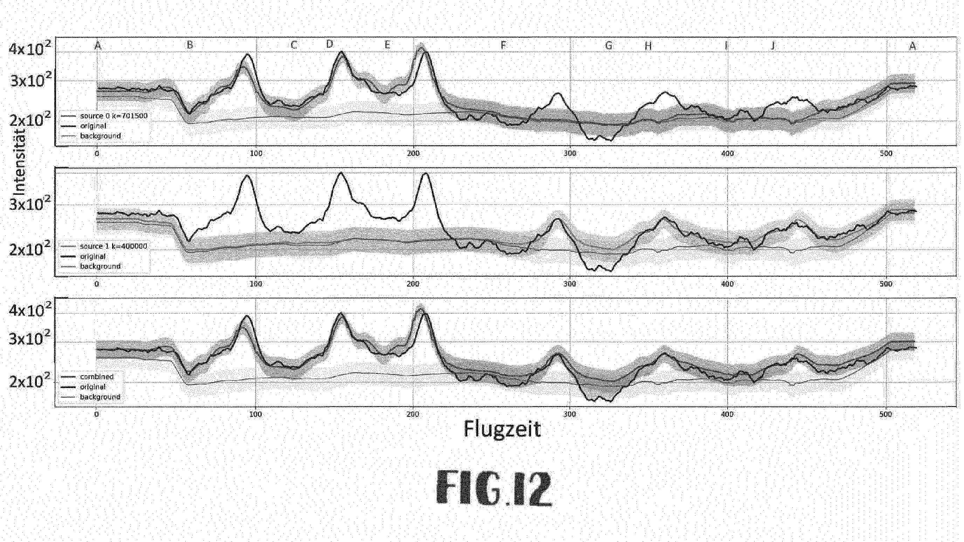

Beispiel: Eine anschauliche Darstellung der Fehlerminimierung findet sich in Fig. 11 und 12. In Fig. 11 ist die Flugtrajektorie entlang der Bewegungslinie A-B-C-D-E mit zwei Schleifen in Form des Spürens nach höchster Dosisleistung über den Intensitätsmaxima der Messwerte dargestellt. Die Messwerte sind in den drei Plots der Fig. 12 entlang der Zeit dargestellt (schwarze Linien). Klar ersichtlich sind die Intensitätsmaxima der ersten drei Überflüge über die erste Quelle, sowie die etwas kleineren Maxima (aufgrund des höheren Abstands zum Boden) beim Überflug über die zweite Quelle. Ziel ist es mit dem Ergebnis der Optimierung unter Anwendung des Radioaktivitätsmodells, diese Werte nachzubilden. Die Optimierung ergab hier zwei Quellen 2 von bestimmter Stärke. Das Radioaktivitätsmodell ergab für die erste Quelle (Plot Fig. 12 oben) eine hohe Übereinstimmung mit den Messwerten bis zum Zeitindex 270, für die zweite Quelle bis zum Ende des Fluges (graue Linie im Plot oben bzw. graue Linie im mittleren Plot, Fig. 12). Die Summe der Verstrahlung aus beiden ermittelten Quellen führt insgesamt zu einer über alle Bereiche hinweg guten Übereinstimmung mit den tatsächlichen Messwerten (Fig. 12, Plot unten, graue Kurve). Während des Optimierungsschrittes wird versucht den Fehler (entspricht der Fläche zwischen den Messwerten und der Modellierung, in Grau, Plot unten) zu minimieren.

Ergänzend ist anzumerken, dass die Eigenschaften der Quellensuche als auch deren Performance entscheidend von der Wahl des Fehlerterms abhängen. Nicht zuletzt findet über diese auch eine gewisse Anpassung an die zu erwartenden Szenarien statt. Das eingesetzte Verfahren weist folgende Eigenschaften auf:

- Globale Optimierung: Grundsätzlich werden alle Messwerte zur Berechnung herangezogen, unabhängig von ihrer Entfernung zur vermeintlichen Quelle 2. Dadurch werden auch geringe Einflüsse von schwachen oder weiter entfernt liegenden Quellen 2 berücksichtigt.

- Mehrquellenfähigkeit: Gleichzeitig wird die Wirkreichweite der Quelle 2 berücksichtigt, indem deren möglicher Einfluss für alle Messpunkte individuell ermittelt wird, anstelle einer starren Reichweitenbegrenzung. Durch diese flexible Zonenberechnung wird so vor allem vermieden, dass im Ergebnis Artefakte entstehen können und andererseits die lokale Optimierung unterstützt wird. Diese ermöglicht die Mehrquellenfähigkeit, d.h. das zeitgleiche Auffinden mehrerer Quellen 2 an unterschiedlichen Orten.

Hinsichtlich der Verstrahlung über Grund ist das Spektrum, das Verfahren der Umrechnung CPS in Dosisleistung und das Verstrahlungsbild zu beachten.

- Spektrum

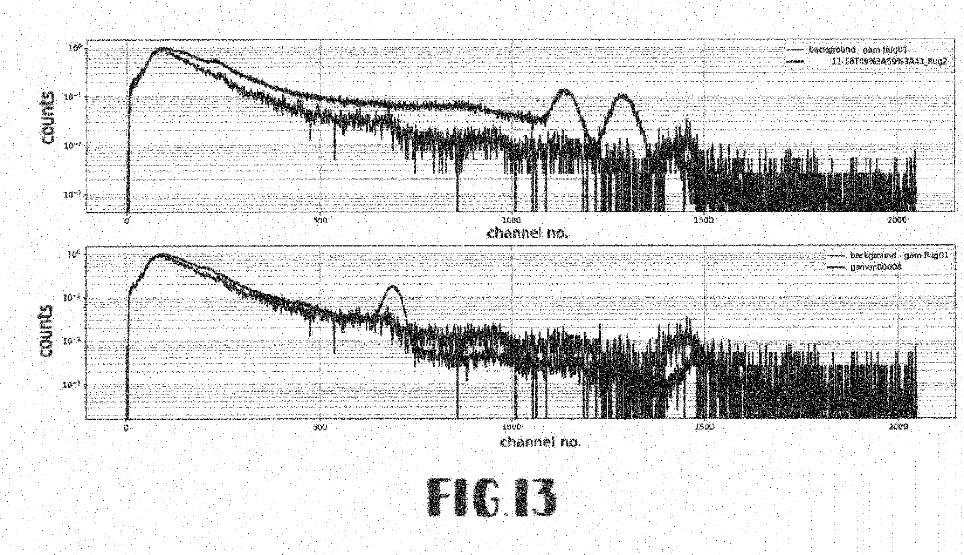

Im Spektrum ist ersichtlich mit welcher Häufung Strahlungsimpulse von unterschiedlichen Energien auftreten. Daraus lassen sich Rückschlüsse auf das zugrundeliegende Nuklid ziehen, da Nuklide unterschiedlichen Typs sehr spezifische Strahlungsimpulse abgeben. Aufgrund der Komplexität der Spektrumanalyse wird die Beurteilung, um welches Nuklid es sich handelt, vom Experten festgelegt und vorgegeben. Alternativ kann das System von einem Nuklid-Typen ausgehen, oder es wird in einem iterativen Verfahrensschritt im Terrain erst ein Spektrum gemessen, daraus auf den vorherrschenden Nuklid-Typ geschlossen und dem daraufhin vorgegeben, und erst dann der eigentliche Spürflug oder die eigentliche Spürfahrt durchgeführt. Fig. 13 zeigt Beispiele für Spektren. Aufgenommen sind sie während zweier Steigflüge direkt über einer Quelle 2. Die Spektren der Beispiele Nuklid Co-60 (oben) und Cs-137 (unten) unterscheiden sich klar in ihrer Signatur, wie zu erkennen ist.

Wie bereits angedeutet ist das Spektrum stets ein Abbild von Messungen über einen längeren Zeitraum. Aufgrund des stochastischen Prozesses der Strahlungsabgabe ist eine Momentaufnahme zumeist wenig aufschlussreich. Der Zeitraum, über den das Spektrum akkumuliert wird, sollte zumindest mehrere Sekunden betragen. In der Regel ist es, abhängig von der Aktivität, erst nach 1-2 Minuten aussagekräftig.

- Methode der Umrechnung CPS in Dosisleistung

Die Dosisleistung ist ein Maß für die Auswirkung radioaktiver, bzw. ionisierender Strahlung, auf eine Masse und wird in Energie pro Zeiteinheit gemessen. Sie ist daher von enormer Wichtigkeit für die Beurteilung der Schadwirkung einer radioaktiven Strahlung auf den menschlichen Körper. Im Gegensatz dazu sagen die von der Gamma-Sonde gemessenen CPS noch wenig, abgesehen von einem grundsätzlich linearen Zusammenhang, über die potentielle Wirkung aus. Erst in Verbindung mit der zugehörigen Energie der Zählraten, lässt sich die Dosisleistung bestimmen. Ziel der Verstrahlungskarte über Grund ist es, aus den vorhandenen Informationen, Dosisleistungswerte für das erfasste Gelände zu ermitteln. Dabei ist aus Konvention stets eine Position in 1 m Höhe über Grund gemeint.

Zur Berechnung der Dosisleistung sind 3 Angaben notwendig:

- CPS der Quelle 2: Diese wird im Zuge der Quellenlokalisierung ermittelt.
- Das Spektrum bildet den Zusammenhang zwischen CPS und Energie ab. Die Angabe des Nuklids wird vom Bediener auf Basis des angezeigten Spektrums definiert. Alternativ könnte die Nuklidbestimmung direkt von der Sonde verwendet werden. Zur Berechnung werden die für das jeweilige Nuklid charakteristischen Energiespitzen herangezogen.
- Kennwerte über die Sonde, die vom Hersteller in einer umfangreichen Kalibrierung und Verifikation im Labor erstellt werden.

Die Berechnung der Dosisleistung erfolgt anhand folgender Formel:

$$dose = \sum_{i}^{bin} c_i * \sum_{j}^{degree} A_j * \frac{\log(centers_i)^j}{t * 1000} * 3{,}6$$

wobei *dose* die Dosisleistung in $\mu S/h$ ist, *bin* die Anzahl der Kanäle im Spektrum, $c_i$ der Zählwert des i-ten Kanals, *degree* die Länge des Kalibriervektors, $A_j$ und *centers* Kalibrierdaten und *t* die Integrationsdauer des Spektrums in Sekunden. Um die Berechnung zu beschleunigen, lassen sich die konstanten Parameter vorberechnen, wodurch sich die Formel auf eine einzelne Summation reduziert.

- Verstrahlungsbild

Die Gesamtdosisleistung setzt sich schließlich aus der Summe aus allen vorhandenen Quellen und jener des Hintergrunds zusammen. Für die Berechnung der Gesamt-Dosisleistung an einer bestimmten Position *p* ausgehend von N Quellen $Q^N$ und einem Hintergrundstrahlungsmodell *bg* wird nach folgender Formel vorgegangen:

$$dose_G(Q^N, p) = \sum_{i}^{N} dose(radmodell(Q_i, p)) + dose(bg)$$

wobei *radmodell*(*Q,p*) das Radioaktivitätsmodell verwendet, um die Intensität der radioaktiven Strahlung von einer Quelle an einer bestimmten Position zu berechnen. Ein Beispiel eines Verstrahlungsbildes ist in folgender Fig. 14 gezeigt. Der Vergleich mit zugehöriger Ground Truth erfolgt weiter unten. Verstrahlungsbild in Fig. 14 enthält Angaben in Dosisleistung und den Verstrahlungslinien für 10, 1 und 0,1 $\mu S/h$. Die tatsächliche Position der Quellen sind mit grauen plus-Zeichen markiert.

Im Zuge der Testflüge wurden alle Spürtechniken evaluiert. Grundsätzlich kann die Aussage getroffen werden, dass sämtliche Spürverfahren auch mit dem ULFZ oder Helikopter geflogen werden können, mit z.B. den Flugmustern

- Mäander,
- Spot,
- Kreuz/Stern,
- nach der höchste Dosisleistung,
- Bewegungslinien.

Dank der über große Bereiche Unempfindlichkeit des ULFZs gegenüber radioaktiver Strahlung und der flexiblen Anpassung der Flugmuster an das Gelände bzw. auch dank der Echtzeitauswertung des Verstrahlungsbildes, lassen sich zu jeder Zeit weiter oben genannte Spürverfahren einsetzen, die dazu geeignet sind in kurzer Zeit Informationen über die Verstrahlung zu gewinnen.

Luftspürverfahren mit dem Ziel der Quellenlokalisierung im Raum können über folgenden Ablauf abgedeckt werden:

(i) Mäanderflug oder flächiges Spürverfahren,

(ii) Übergang in anderes Spürverfahren für jeden Hotspot,

(iii) Detailuntersuchung mit z.B. Hovern zur Nuklidbestimmung,

(iv) Ermittlung von Verstrahlungslinien (automatisch durch Echtzeit-Analyse).

Luftspürverfahren mit einem anderen Ziel, nämlich dem Ziel von Spüren entlang von Bewegungslinien beginnen dagegen zunächst mit einem Flug über der Bewegungslinie mit der Option, bei erhöhter Strahlung eine Quellenlokalisierung im Raum, analog zu oben durchzuführen:

(i') Flug entlang Bewegungslinie,

(ii') Bei erhöhter Dosisleistung Übergang in ein flächiges Spürverfahren und optional Quellenlokalisierung im Raum mit automatischer Ermittlung von Verstrahlungslinien.

- Suchwegpunkte

Suchwegpunkte können aufgrund der in Echtzeit ausgewerteten Verstrahlungsbilder live angepasst werden. So lässt sich insbesondere die Position einer Quelle 2 in kurzer Zeit bestimmen, wenn das Flugmuster so angepasst wird, dass der Hotspot entweder eingekreist wird oder mittels Spüren nach höchster Dosisleistung direkt überflogen wird. Das Setzen der Flugmuster ist über die Visualisierung möglich.

Es haben Tests und Evaluierungen stattgefunden, die besonders eine Genauigkeitsanalyse und Systemparameter betraf.

Im Zuge der Entwicklung wurden mehrere Testflüge durchgeführt. Dabei wurden

- Messdaten zur Methoden- bzw. Verfahrensentwicklung erhoben,
- sog. "Ground Truth" aufgenommen,
- Verfahren getestet und evaluiert.

Die Genauigkeitsanalyse umfasste die Lokalisierung und die Verstrahlung.

- Genauigkeit der Lokalisierung

Zur Untersuchung der Genauigkeit wurden alle Testflüge ausgewertet und die Distanzen der ermittelten zur tatsächlichen Quellenposition eruiert, unabhängig vom Zweck der Testflüge. Einige Testflüge hatten zum Ziel die Systemgrenzen zu bestimmen und wurden daher bewusst so gewählt die Leistungsfähigkeit zu überschreiten.

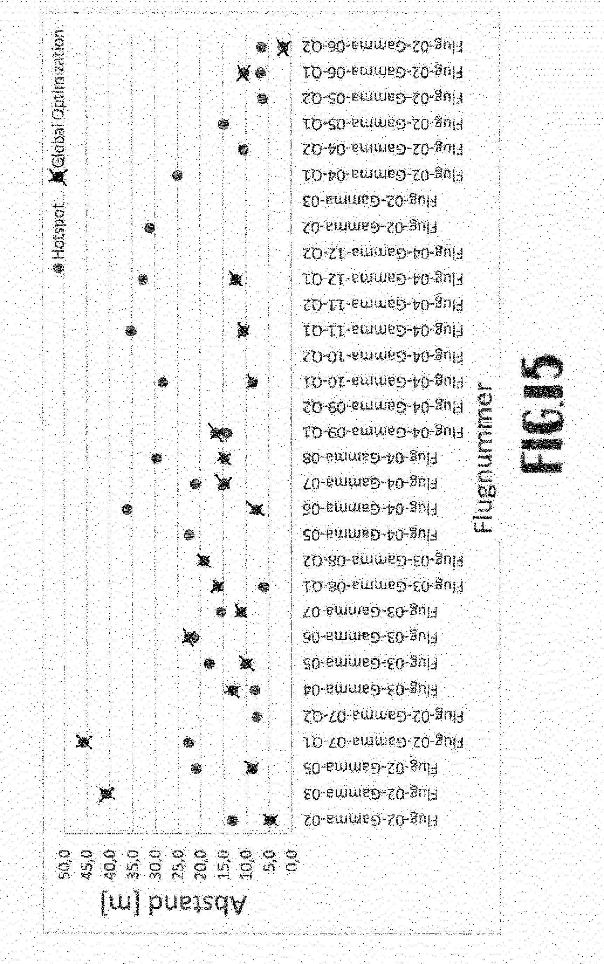

Für die Hotspot-Detektion wurde gemäß Fig. 15 die Position mit einer mittleren Abweichung von 19,0 m bestimmt. Die Lokalisierungsmethode konnte die Position der Quellen im Mittel auf 15,2 m genau bestimmen.

- Verstrahlung

Um die Berechnung der Dosisleistung am Boden 7 zu verifizieren, wurden nach Ausbringung der Quelle 2 im Testgebiet an verschiedenen Orten die Dosisleistung mit einem geeichten Handmessgerät gemessen. Die lokalen Unterschiede ($0,5$ vs. $0,25\mu$Sv/h, $1,0$ vs. $0,8\mu$Sv/h, $10$ vs. $1,5$ bzw. $0,65p$Sv/h) lassen sich zum Teil durch zwei Faktoren erklären: a) die Strahlungsquelle ist kein perfekter Kugelstrahler wie angenommen, b) im Nahbereich der Quelle führen selbst geringe Abstandsänderungen zu erheblichen Intensitätsveränderungen (quadratisches. Abstandsgesetz). Eine noch genauere Untersuchung ist möglich, aber im Rahmen der Erfindung nicht erforderlich.

Fig. 14 zeigt die ermittelte Dosisleistung über Grund (links) mit Konturlinien für $0,5$, $1,0$ und $10$ $\mu$S/h. Referenzmessungen mit Handmessgerät sind rechts zu sehen.

Zusätzlich wurden verschiedene Systemparameter hinsichtlich der Detektion von radioaktiven Quellen 2 beim Luftspüren untersucht. Diese stützen sich allesamt auf die im Rahmen der Erfindung durchgeführten Flüge, sowie darauf aufbauend auf Simulationen zur Verifikation bzw. zur Ergänzung der Testergebnisse. Eine umfassende Charakterisierung ist damit nicht abgedeckt, es gewährleistet jedoch eine erste Einschätzung der Eigenschaften und Leistungsfähigkeit des Sensorikpakets.

Grundsätzlich hängt die Detektion von Quellen 2 beim Luftspüren von vielen Faktoren ab; die wichtigsten sind: Umweltparameter, Hintergrundstrahlung, Stärke der Quelle, Verdeckungen, Radionuklid, Quellenverteilung, Flughöhe. Für die vorliegenden Analysen wurden stets die Ergebnisse aus den durchführten Testflügen herangezogen, die allgemeinen Systemparameter sind daher folgende:

- Die Hintergrundstrahlung bezieht sich daher immer auf das Testgebiet Allentsteig.

- Als Quellen wurden stets entweder Co-60 oder Cs-137 verwendet.

- Fluggeschwindigkeit war etwa 6-8 m/s.

- Rasterabstand bei Mäander betrug ca. 60 m.

- Die Flughöhe h lag bei etwa 10-150 m.

**Bezugszeichenliste**

| | |
|---|---|
| 1 | ULFZ |
| 2 | Quelle |
| 3 | Boden |
| 4 | Terrain |
| 6 | Kartenpunkt |
| 7 | Boden |
| 8 | Vegetation |
| 9 | Gebäude |
| h | Flughöhe |

**Patentansprüche**

1. Verfahren zur Lokalisierung radioaktiver Quellen (2) in einem zu untersuchenden freien Terrain (4) in Echtzeit

   - mit einer mobilen Trägerplattform, auf welcher eine Gamma-Sonde und eine Lokalisierungsvorrichtung angeordnet sind,
   - wobei die Trägerplattform dazu geeignet ist, das Terrain (4) abzufahren oder zu überfliegen,

   **dadurch gekennzeichnet, dass** (a) eine elektronische Karte für das Terrain (4) und ein Modell der Hintergrundstrahlung des Terrains bereitgestellt werden,

   (b) woraufhin die Trägerplattform einen Teil des Terrains (4) während einer Spürfahrt abfährt oder überfliegt, und
   (c) währenddessen Radioaktivitätsmesswerte mittels der Gamma-Sonde erfasst werden und
   (d) die Radioaktivitätsmesswerte zusammen mit den über die Lokalisierungsvorrichtung ermittelten Koordinaten der Trägerplattform in ein Rechenmodell eingegeben werden, in welchem Verstrahlungswerte unter Berücksichtigung der Hintergrundstrahlung errechnet werden und eine Zuordnung der errechneten Werte zu Kartenpunkten (6) durchgeführt wird,
   (e) wobei Interpolationen zwischen dem Verstrahlungswert eines Kartenpunktes (6) mit den Verstrahlungswerten von benachbarten und laufend hinzutretenden Kartenpunkten (6) durchgeführt werden, und
   (f) darauf aufbauend ein oder mehrere Positionen von Quellen (2) errechnet werden, sowie
   (g) eine Ausgabe des Ergebnisses in Form einer Liste umfassend allfällig erkannte Quellenpositionen oder in Form einer zweidimensionalen Graphik, welche das Terrain darstellt und in welcher allfällig erkannte Positionen von Quellen (2) verzeichnet sind, erfolgt.

2. Verfahren nach Anspruch 1, **dadurch gekennzeichnet, dass** der Trägerplattform ein Bewegungsmuster zum Abfahren oder Abfliegen, vorzugsweise ein mäanderförmiges Bewegungsmuster mit vorbestimmten Rasterabstand vorgegeben wird.

3. Verfahren nach einem der Ansprüche 1 oder 2, **dadurch gekennzeichnet, dass** die Trägerplattform das Bewegungsmuster semi-autonom abfährt oder abfliegt.

4. Verfahren nach einem der Ansprüche 1 bis 3, **dadurch gekennzeichnet, dass** die Radioaktivitätsmesswerte zumindest Messwerte in CPS umfassen.

5. Verfahren nach einem der Ansprüche 1 bis 4, **dadurch gekennzeichnet, dass** die Gamma-Sonde während der Spürfahrt Radioaktivitätsmesswerte im Sekundentakt bereitstellt.

6. Verfahren nach einem der Ansprüche 1 bis 5, **dadurch gekennzeichnet, dass** die Schritte (d) bis (f) in einer Rechnereinheit auf der Trägerplattform erfolgen.

7. Verfahren nach einem der Ansprüche 1 bis 5, **dadurch gekennzeichnet, dass** die Messdaten der Gamma-Sonde und der Lokalisierungsvorrichtung zu einem Datensatz zusammengefasst und an eine externe Station mittels Funkfernverbindung gesendet werden.

8. Verfahren nach einem der Ansprüche 1 bis 7, **dadurch gekennzeichnet, dass** die Lokalisierungsvorrichtung ein GPS-Modul ist.

9. Verfahren nach einem der Ansprüche 1 bis 8, **dadurch gekennzeichnet, dass** die Interpolationen zwischen dem Verstrahlungswert eines Kartenpunktes (6) mit den Verstrahlungswerten von benachbarten und laufend hinzutretenden Kartenpunkten (6) durchgeführt werden, indem (i) zwischen den Messpunkten und darüber hinaus auf ein Raster, welches über das gesamte Terrain gelegt wird, interpoliert wird, und zwar vorzugsweise mithilfe des Kriging-Verfahrens, und (ii) ausgehend von dem Raster auf alle Bodenpunkte des Terrains interpoliert wird.

10. Verfahren nach einem der Ansprüche 1 bis 9, **dadurch gekennzeichnet, dass** die Trägerplattform eine Stereokamera aufweist.

11. Verfahren nach einem der Ansprüche 1 bis 10, **dadurch gekennzeichnet, dass** die Trägerplattform ein ULFZ (1) ist.

12. Verfahren nach Anspruch 11, **dadurch gekennzeichnet, dass** vor dem Überfliegen des Terrains (4) ein Kalibrierungsflug in einem bekannten Gebiet durchgeführt wird, wobei während des Kalibrierungsfluges die Hintergrundstrahlung in Abhängigkeit der Flughöhe ermittelt wird.

13. Verfahren nach einem der Ansprüche 11 oder 12, **dadurch gekennzeichnet, dass** in das Rechenmodell auch Eigenstrahlung, die kosmische Strahlung und die terrestrische Strahlung eingebracht werden.

14. Verfahren nach einem der Ansprüche 11 bis 13, **dadurch gekennzeichnet, dass** die Trägerplattform einen LiDAR-Sensor aufweist mit welchem während der Erfassung der Radioaktivitätswerte ein Bodenbild des abgeflogenen Terrains (4) erstellt wird.

15. Verfahren nach einem der Ansprüche 1 bis 10, **dadurch gekennzeichnet, dass** die Trägerplattform ein Landfahrzeug ist.

SENSORIKPAKET

ANALYSEPAKET

FIG 1

EP 4 332 635 A1

FIG.2

$SDI_{Cosmic}$

$SDI_{Vehicle}$

$\mu_{Air}$

$SDI_{Back}$

h

FIG.3

FIG. 4

FIG.5

EP 4 332 635 A1

FIG.6

EP 4 332 635 A1

FIG.7

EP 4 332 635 A1

FIG.8

FIG.9

Boden (ground)

Vegetation

Gebäude

Klassifizierung

FIG. 10

FIG. II

EP 4 332 635 A1

FIG.12

FIG.13

FIG.14

FIG.15

Europäisches Patentamt
European Patent Office
Office européen des brevets

**EUROPÄISCHER RECHERCHENBERICHT**

Nummer der Anmeldung

EP 23 19 4186

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | CONNOR D. ET AL: "Airborne radiation mapping: overview and application of current and future aerial systems", INTERNATIONAL JOURNAL OF REMOTE SENSING, Bd. 37, Nr. 24, 10. November 2016 (2016-11-10), Seiten 5953-5987, XP093116768, GB ISSN: 0143-1161, DOI: 10.1080/01431161.2016.1252474 Gefunden im Internet: URL:https://www.tandfonline.com/doi/pdf/10.1080/01431161.2016.1252474> * Zusammenfassung * * Abbildung 2 * * Abschnitte 3.1, 3.2, 4.1, 4.2, 6, 6.1, 6.1.2, 6.2 * * Seite 5968, Zeile 7 von unten – letzte Zeile * * Seite 5958, Abschnitt, der mit "This effect" startet * * Seite 5955, letzter Satz * * Abschnitt 2, Zeilen 23-27 *<br>----- | 1-15 | INV. G01T1/169 G01T7/00 |
| Y | PETR GABRLIK ET AL: "Using an Automated Heterogeneous Robotic System for Radiation Surveys", ARXIV.ORG, CORNELL UNIVERSITY LIBRARY, 201 OLIN LIBRARY CORNELL UNIVERSITY ITHACA, NY 14853, 29. Juni 2020 (2020-06-29), XP081882535, DOI: 10.1002/ROB.22010 * Zusammenfassung * * Abbildungen 1-8, 19, 20, 26 * * Abschnitt 3.7, Absätze 1 und 2 * * Abschnitte 3.4, 3.6, 4.2 *<br>-----<br>-/-- | 1-15 | RECHERCHIERTE SACHGEBIETE (IPC)<br><br>G01T |

Der vorliegende Recherchenbericht wurde für alle Patentansprüche erstellt

| Recherchenort | Abschlußdatum der Recherche | Prüfer |
|---|---|---|
| Den Haag | 19. Januar 2024 | Santen, Nicole |

EPO FORM 1503 03.82 (P04C03)

**EP 4 332 635 A1**

Europäisches Patentamt
European Patent Office
Office européen des brevets

# EUROPÄISCHER RECHERCHENBERICHT

Nummer der Anmeldung

EP 23 19 4186

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | TOMAS LAZNA ET AL: "Cooperation between an unmanned aerial vehicle and an unmanned ground vehicle in highly accurate localization of gamma radiation hotspots", INTERNATIONAL JOURNAL OF ADVANCED ROBOTIC SYSTEMS, Bd. 15, Nr. 1, 1. Januar 2018 (2018-01-01), XP055736462, CR ISSN: 1729-8814, DOI: 10.1177/1729881417750787 * Zusammenfassung * * Seite 7, linke Spalte, erster Absatz; Abbildung 24 * * Seite 7, rechte Spalte, Absatz, der mit "If the peak amplitude" beginnt * * Abbildungen 1, 4 * ----- | 1-15 | |
| Y | FR 3 075 400 A1 (ELECTRICITE DE FRANCE [FR]) 21. Juni 2019 (2019-06-21) * Zusammenfassung * * Abbildungen 4, 5 * * Seite 14, Zeilen 2-5 * * Seite 17, Zeile 26 – Seite 18, Zeile 4 * * Seite 19, Zeile 27 – Seite 20, Zeile 25 * ----- -/-- | 1-14 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 19. Januar 2024 | Santen, Nicole |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

Seite 2 von 3

38

EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | BACA TOMAS ET AL: "Gamma Radiation Source Localization for Micro Aerial Vehicles with a Miniature Single-Detector Compton Event Camera", 2021 INTERNATIONAL CONFERENCE ON UNMANNED AIRCRAFT SYSTEMS (ICUAS), IEEE, 15. Juni 2021 (2021-06-15), Seiten 338-346, XP033942447, DOI: 10.1109/ICUAS51884.2021.9476766 [gefunden am 2021-07-06] * Zusammenfassung * * Abbildung 1 * * Seite 339, linke Spalte, Abschnitt B. Contributions * * Seite 341, linke Spalte, 1. Absatz * ----- | 1-15 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 19. Januar 2024 | Santen, Nicole |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 19 4186

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-01-2024

| Im Recherchenbericht angeführtes Patentdokument | Datum der Veröffentlichung | Mitglied(er) der Patentfamilie | Datum der Veröffentlichung |
|---|---|---|---|
| FR 3075400 A1 | 21-06-2019 | FR 3075400 A1<br>WO 2019121121 A1 | 21-06-2019<br>27-06-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2021235777 A1
- WO 2020198877 A1
- FR 3088306 A1
- EP 3036565 A1
- EP 0194933 A1

**In der Beschreibung aufgeführte Nicht-Patentliteratur**

- Effects of environmental factors on the monitoring of environmental radioactivity by airborne gamma-ray spectrometry. **AMESTOY JULIEN et al.** JOURNAL OF ENVIRONMENTAL RADIOACTIVITY. ELSEVIER APPLIED SCIENCE PUBLISHERS, 28. Juli 2021, vol. 237
- Aerial radiation monitoring around the Fukushima Dai-ichi nuclear power plant using an unmanned helicopter. **YUKIHISA SANADA et al.** JOURNAL OF ENVIRONMENTAL RADIOACTIVITY. ELSEVIER APPLIED SCIENCE PUBLISHERS, 01. Januar 2015, vol. 139, 294-299
- **G. F. KNOLL.** Radiation detection and measurement. John Wiley & Sons, 2010
- **TOWLER, J. ; KRAWIEC, B. ; KOCHERSBERGER, K.** Radiation Mapping in Post-Disaster Environments Using an Autonomous Helicopter. *Remote Sensing,* 2012, vol. 4 (7), 1995-2015
- **PINGEL, THOMAS J. ; KEITH C. CLARKE ; WILLIAM A. MCBRIDE.** An Improved Simple Morphological Filter for the Terrain Classification of Airborne LIDAR Data. *ISPRS Journal of Photogrammetry and Remote Sensing,* 2013, vol. 77, 21-30
- **DANIE G. KRIGE.** A statistical approach to some basic mine valuation problems on the Witwatersrand. *J. of the Chem., Metal. and Mining Soc. of South Africa,* 1951, vol. 52 (6), 119-139